(19) Europäisches Patentamt / European Patent Office / Office européen des brevets

(11) **EP 1 839 442 B1**

(12) **FASCICULE DE BREVET EUROPEEN**

(45) Date de publication et mention de la délivrance du brevet:
**17.02.2010 Bulletin 2010/07**

(51) Int Cl.:
***H04N 7/26*** (2006.01)

(21) Numéro de dépôt: **05826669.3**

(22) Date de dépôt: **20.12.2005**

(86) Numéro de dépôt international:
**PCT/EP2005/056986**

(87) Numéro de publication internationale:
**WO 2006/074855 (20.07.2006 Gazette 2006/29)**

(54) **DISPOSITIFS ET PROCEDES DE CODAGE ET DE DECODAGE ECHELONNABLES DE FLUX DE DONNEES D'IMAGES, SIGNAL, PROGRAMME D'ORDINATEUR ET MODULE D'ADAPTATION DE QUALITE D'IMAGE CORRESPONDANTS**

EINRICHTUNG UND VERFAHREN ZUR SKALIERBAREN CODIERUNG UND DECODIERUNG EINES BILDDATENSTROMS, SIGNAL, COMPUTERPROGRAMM UND ANPASSUNGSMODUL FÜR EINE ENTSPRECHENDE BILDQUALITÄT

DEVICE AND METHOD FOR SCALABLY ENCODING AND DECODING AN IMAGE DATA STREAM, A SIGNAL, COMPUTER PROGRAM AND AN ADAPTATION MODULE FOR A CORRESPONDING IMAGE QUALITY

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **12.01.2005 FR 0500331**

(43) Date de publication de la demande:
**03.10.2007 Bulletin 2007/40**

(73) Titulaire: **FRANCE TELECOM**
**75015 Paris (FR)**

(72) Inventeurs:
- **AMONOU, Isabelle**
  **F-35235 Thorigne Fouillard (FR)**
- **CAMMAS, Nathalie**
  **F-35490 SENS DE BRETAGNE (FR)**
- **PATEUX, Stéphane**
  **F-35700 RENNES (FR)**

(74) Mandataire: **Bioret, Ludovic**
**Cabinet Vidon**
**16 B, rue de Jouanet - B.P. 90333**
**35703 Rennes Cedex 07 (FR)**

(56) Documents cités:
**WO-A-00/05898**     **WO-A-02/25925**
**US-A1- 2002 118 742**

- **RADHA H ET AL: "Scalable Internet video using MPEG-4" SIGNAL PROCESSING. IMAGE COMMUNICATION, ELSEVIER SCIENCE PUBLISHERS, AMSTERDAM, NL, vol. 15, no. 1-2, septembre 1999 (1999-09), pages 95-126, XP004180640 ISSN: 0923-5965**
- **ANDREOPOULOS Y ET AL: "Fully-scalable wavelet video coding using in-band motion compensated temporal filtering" 2003 IEEE INTERNATIONAL CONFERENCE ON ACOUSTICS, SPEECH, AND SIGNAL PROCESSING. PROCEEDINGS. (ICASSP). HONG KONG, APRIL 6 - 10, 2003, IEEE INTERNATIONAL CONFERENCE ON ACOUSTICS, SPEECH, AND SIGNAL PROCESSING (ICASSP), NEW YORK, NY : IEEE, US, vol. VOL. 1 OF 6, 6 avril 2003 (2003-04-06), pages III417-III420, XP010639098 ISBN: 0-7803-7663-3**
- **TAUBMAN D: "HIGH PERFORMANCE SCALABLE IMAGE COMPRESSION WITH EBCOT" IEEE TRANSACTIONS ON IMAGE PROCESSING, IEEE INC. NEW YORK, US, vol. 9, no. 7, juillet 2000 (2000-07), pages 1158-1170, XP000951990 ISSN: 1057-7149 cité dans la demande**

## Description

### 1. Domaine de l'invention

Le domaine de l'invention est celui du codage et du décodage d'images ou de séquences vidéo d'images. Plus précisément, l'invention concerne une technique de codage et de décodage d'images échelonnable (en anglais "scalable"), c'est-à-dire à qualité adaptable et résolution spatio-temporelle variable.

### 2. Solutions de l'art antérieur

De nombreux systèmes de transmission de données sont aujourd'hui hétérogènes, en ce sens qu'ils desservent une pluralité de clients disposant de types d'accès aux données très divers. Ainsi, le réseau mondial Internet par exemple, est accessible aussi bien à partir d'un terminal de type ordinateur personnel (PC) que d'un radiotéléphone. Plus généralement, la bande passante pour l'accès au réseau, les capacités de traitement des terminaux clients, la taille de leurs écrans varient fortement d'un utilisateur à l'autre. Ainsi, un premier client peut par exemple accéder au réseau Internet à partir d'un PC puissant, et disposer d'un débit ADSL ("Asymmetric Digital Subscriber Line" pour "Ligne d'abonné numérique à structure asymétrique") à 1024 kbits/s alors qu'un deuxième client cherche à accéder aux mêmes données au même instant à partir d'un terminal de type PDA ("Personal Digital Assistant" pour "assistant numérique personnel") connecté à un modem de faible débit.

Il est donc nécessaire de proposer à ces divers utilisateurs un flux de données qui soit adapté tant en terme de débit que de résolution des images à leurs différents besoins. Cette nécessité s'impose plus largement pour toutes les applications accessibles à des clients disposant de capacités d'accès et de traitement très diverses, et notamment les applications de :

- VOD ("Video On Demand" pour "vidéo à la carte"), accessibles aux terminaux de radiocommunication de type UMTS ("Universal Mobile Telecommunication Service" pour "service de télécommunication mobile universel"), aux PC ou aux terminaux de télévision avec accès ADSL, etc. ;
- mobilité de session (par exemple reprise sur un PDA d'une session vidéo commencée sur un téléviseur, ou, sur un mobile UMTS d'une session commencée sur GPRS ("General Packet Radio Service" pour "service général de radiocommunication par paquets")) ;
- continuité de session (dans un contexte de partage de la bande passante avec une nouvelle application) ;
- télévision haute définition, dans laquelle un encodage vidéo unique doit permettre de servir aussi bien des clients disposant d'une définition standard SD que des clients disposant d'un terminal à haute définition HD ;
- visioconférence, dans laquelle un encodage unique doit répondre aux besoins de clients disposant d'un accès UMTS et d'un accès Internet ;
- etc.

Pour répondre à ces différents besoins, on a développé des algorithmes de codage d'images échelonnables, ou "scalables", qui permettent une qualité adaptable et une résolution spatio-temporelle variable. Le codeur génère un flux compressé présentant une structure hiérarchique de couches, dans laquelle chacune des couches est emboîtée dans une couche de niveau supérieur. Par exemple, une première couche de données véhicule un flux à 256kbits/s, qui pourra être décodé par un terminal de type PDA, et une deuxième couche de données complémentaire véhicule un flux de résolution supérieure à 256kbits/s qui pourra être décodé, en complément du premier, par un terminal plus puissant de type PC. Le débit nécessaire pour le transport de ces deux couches emboîtées est dans cet exemple de 512 kbits/s.

Certains de ces algorithmes de codage vidéo échelonnables sont aujourd'hui en cours d'adoption par la norme MPEG ("Moving Picture Expert Group" pour "Groupe d'experts en codage d'images"), dans le cadre du groupe de travail MPEG21.

Notamment, le modèle qui a été retenu récemment par le groupe de travail MPEG-21 SVC ("Scalable Video Coding" pour "codage vidéo échelonnable") est appelé SVM ("Scalable Video Model" pour "modèle vidéo échelonnable"), et est fondé sur un codeur échelonnable basé sur des solutions de type AVC ("Advanced Video Coding" pour "codage vidéo avancé"). Ce modèle est décrit plus en détails dans le document N6716 ISO/IEC JTC 1/SC 29/WG 11, intitulé "Scalable Video Model 3.0", Octobre 2004, Palma de Mayorque, Espagne. Le groupe de travail MPEG 21 a pour objectif de proposer une norme de fourniture de flux échelonnables à grain moyen dans les dimensions temporelle, spatiale et en qualité.

### 2.1 Le codeur SVM MPEG-21

**2.1.1** Principales caractéristiques du codeur

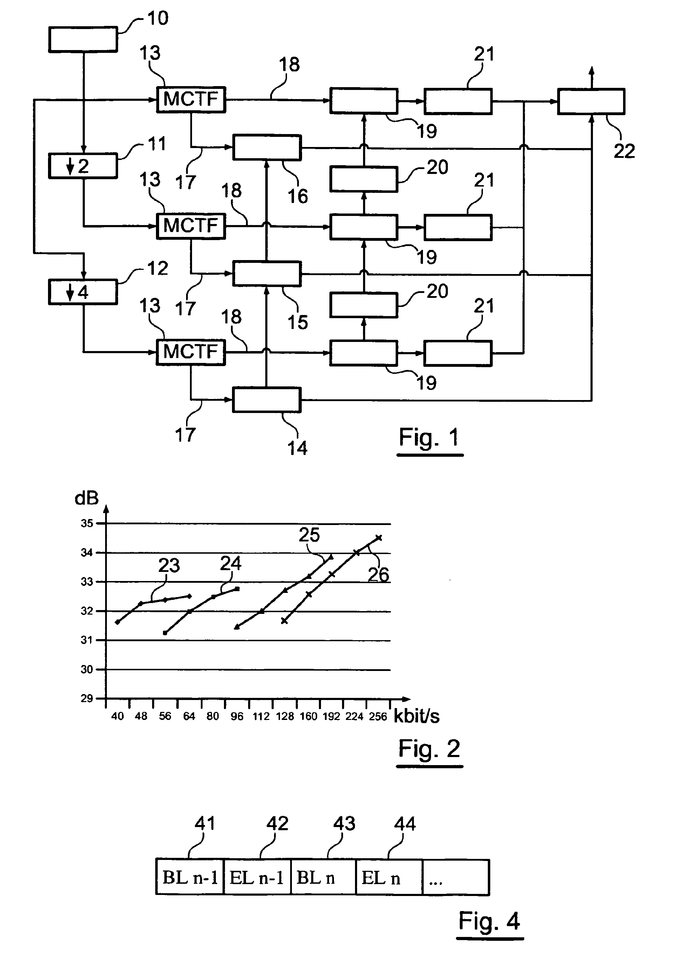

La figure 1 illustre la structure d'un tel codeur, qui présente une structure pyramidale. Les composantes d'entrée vidéo 10 subissent un sous-échantillonnage dyadique (décimation 2D par 2 référencée 11, décimation 2D par 4 référencée 12). Chacun des flux sous-échantillonnés subit ensuite une décomposition temporelle 13 de type MCTF ("Motion Compensated Temporal Filtering" pour "filtrage temporel compensé en mouvement"). Une version basse résolution de la séquence vidéo est codée 14 jusqu'à un débit donné R_r0_max qui correspond au débit maximum décodable pour la résolution spatiale basse r0 (ce niveau de base est compatible AVC).

Les niveaux supérieurs sont ensuite codés 15, 16 par soustraction du niveau précédent reconstruit et sur-échantillonné et codage des résidus sous forme :

- d'un niveau de base ;
- éventuellement d'un ou plusieurs niveaux de rehaussement obtenus par codage multipasse de plans de bits (appelé par la suite FGS pour "Fine Grain Scalability", échelonnabilité à grain fin). Le résidu de prédiction est codé jusqu'à un débit R_ri_ max qui correspond au débit maximum décodable pour la résolution ri.

Plus précisément, les blocs de filtrage MCTF 13 réalisent un filtrage en ondelettes temporel, i.e. qu'ils réalignent les signaux dans le sens du mouvement avant filtrage en ondelettes : ils délivrent des informations de mouvement 17 qui alimentent un bloc de codage de mouvement 14-16, et des informations de texture 18, qui alimentent un module de prédiction 19. Les données prédites, en sortie du module de prédiction 19 servent à réaliser une interpolation 20 depuis le niveau inférieur. Elles alimentent également un bloc 21 de transformation spatiale et de codage entropique, qui travaille sur des niveaux de raffinement du signal. Un module de multiplexage 22 ordonne les différents sous-flux générés dans un flux de données compressé global.

La figure 2 illustre les résultats obtenus au moyen du codeur échelonnable de la figure 1, sous la forme de courbes débit-distorsion, représentées pour des résolutions spatiales (CIF/QCIF pour "Common Interface Format/Quarter Common Interface Format", où le CIF correspond à un demi format TV, et le QCIF à un quart de format TV) ou temporelles (7.5-30hz, nombre d'images par seconde) différentes. En ordonnée, on a représenté le PSNR ("Peak Signal to Noise Ratio" pour "rapport signal à bruit crête") et en abscisse, le débit exprimé en kbits/s. Ainsi, la courbe référencée 23 correspond à une résolution spatiale QCIF à une fréquence temporelle de 7,5 Hz, la courbe référencée 24 à une résolution QCIF à 15 Hz, la courbe référencée 25 à une résolution CIF à 15 Hz, et la courbe référencée 26 à une résolution CIF à 30 Hz.

**2.1.2** Génération des couches d'informations au codeur

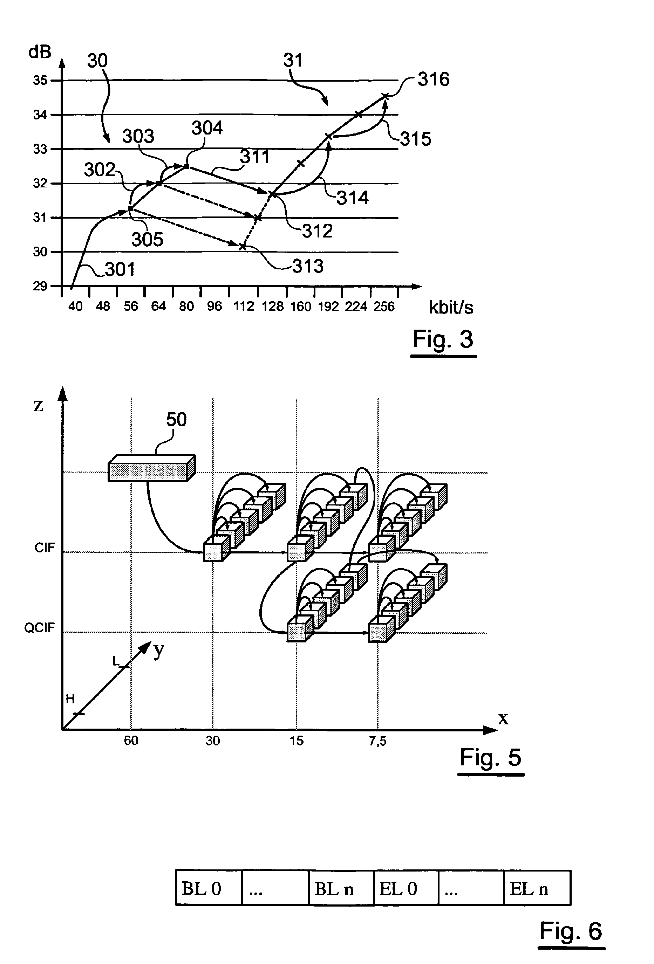

La figure 3 illustre le mécanisme de prédiction/extraction des informations mis en oeuvre par le codeur SVM. On présente ci-après plus en détail la prédiction mise en oeuvre au codage, qui consiste à coder une couche de résolution spatiale de niveau n donné par prédiction à partir des données de couches de résolution spatiale de niveaux inférieurs.

Plus précisément, la figure 3 présente l'exemple de la génération de deux couches successives de résolutions spatiales au format QCIF et CIF, associées respectivement aux courbes de débit-distorsion référencées 30 (format QCIF) et 31 (format CIF). L'Homme du Métier étendra sans difficulté cet exemple au cas plus général de n>2 couches spatiales. Comme précédemment, on a représenté en abscisse le débit exprimé en kbits/s et en ordonnée le PSNR en dB.

Pour chaque couche de résolution spatiale, le codeur code les informations en deux sous-flux : un sous-flux (ou sous-couche) de base (appelée BL (pour "Base Layer" en anglais)) et un sous-flux (ou sous-couche) de rehaussement progressive (appelée EL (pour "Enhancement Layer" en anglais)).

Le format QCIF est d'abord encodé sur toutes les plages de valeurs de fréquences temporelles et de débit. On dispose d'un niveau de base (BL) 301 et de deux niveaux possibles de raffinement (EL), notés FGS1 302 et FGS2 303 (FGS pour "Fine Grain Scalable" en anglais). La couche de rehaussement EL comprend donc les deux passes FGS1 302 et FGS2 303. Des points de raffinement intermédiaires peuvent être obtenus au décodage par coupure des paquets de données entre FGS 1 et FGS2.

Le format QCIF est encodé jusqu'à un point de débit maximal 304 qui est ensuite utilisé comme référence pour la prédiction lors du codage du format CIF. Ce point doit être le meilleur qui puisse être défini pour un fonctionnement globalement optimal du système.

Le format CIF est ensuite codé en utilisant le point le plus haut de la courbe QCIF 304 (i.e. le point de débit maximal de cette courbe) comme prédicteur. Les informations CIF sont également codées en deux sous-flux : un sous-flux de base (BL) et un sous-flux de rehaussement (EL), constitué de deux passes (FGS1 et FGS2).

Sur la figure 3, on constate qu'en partant du point de débit maximum QCIF 304 et en ajoutant la couche de base (BL) 311 du niveau de résolution spatiale CIF, on aboutit au point de référence CIF 312, qui n'est pas le point de débit minimal 313 que l'on peut atteindre au décodage. A partir de ce point de référence 312, les couches de rehaussement EL 314 (FGS1) et 315 (FGS2) permettent d'accéder à d'autres points de débits CIF supérieurs, jusqu'à un débit maximal CIF 316.

La figure 4 résume l'ordre de traitement des informations tel qu'il est fait au codeur pour des couches spatiales quelconques de niveau n-1 et n, où n est entier. BL représente la sous-couche de qualité de base, et EL la sous-couche de qualité de rehaussement, d'un niveau de résolution spatiale. On code donc tout d'abord le sous-flux de base BL du niveau n-1 41, puis le sous-flux de rehaussement EL du niveau n-1 42, avant de coder le sous-flux de base BL du niveau de résolution spatiale n 43, et ensuite le sous-flux de rehaussement EL de ce niveau n 44. On procéderait de même par la suite pour les niveaux de résolution spatiale supérieure.

**2.2 L'extracteur de SVM MPEG-21**

L'extracteur, encore appelé par la suite module d'adaptation de qualité, est l'outil qui extrait, pour le décodeur, la portion du flux de données global généré au codeur, correspondant à un niveau de résolution spatio-temporel donné et pour un débit donné.

**2.2.1** Fonctionnement général d'un extracteur de flux échelonnable

Il existe deux types de codeurs échelonnables, ou scalables :

- les codeurs "naturellement scalables", non prédictifs, (par exemple basés sur une transformation en ondelettes), qui ne précisent pas de relations particulières entre les points de décodage, emboîtés les uns dans les autres (c'est le cas par exemple des codeurs vidéo proposés par la norme JPEG2000) ;
- les codeurs de type SVM, prédictifs, qui ont besoin de construire des chemins d'emboîtement. Plus précisément, pour réaliser une extraction de flux compressé, l'extracteur du SVM suit des chemins prédéfinis, emboîtés les uns dans les autres, comme représenté sur la figure 5.

Sur la figure 5, on a représenté en abscisse la résolution temporelle, exprimée en Hz, en ordonnée, le débit (haut H ou bas L), et sur l'axe des z, la résolution spatiale (QCIF ou CIF). Le flux de données global 50 généré par le codeur est constitué d'un ensemble de sous-flux représentés sous forme de cubes, correspondant chacun à une résolution spatio-temporelle et un débit donnés. Ainsi, pour extraire le débit le plus élevé du niveau de résolution spatiale QCIF à 7.5 Hz, l'extracteur doit suivre le chemin d'extraction suivant : CIF 30 H→CIF 15 H→ QCIF 15 H→ QCIF 7.5 H (on notera que CIF 30 H désigne par exemple le flux au format de résolution spatiale CIF, pour une fréquence temporelle de 30 Hz, à un niveau de débit haut H).

De même, pour extraire le débit le plus faible du QCIF à 7.5 Hz, l'extracteur doit réaliser le chemin CIF30 H→CIF 15 H→ CIF 15 L→ QCIF 15 L→ QCIF 7.5 L.

**2.2.2** Fonctionnement de l'extracteur du SVM MPEG-21

L'extracteur du SVM MPEG-21 fonctionne de la manière suivante. Pour décoder un flux vidéo à un débit donné Rt et à une résolution spatio-temporelle St-Tt, un sous-flux est extrait du flux global de la manière suivante : les couches de qualité de base de tous les niveaux de résolution spatiale (du niveau de base au niveau de résolution spatiale cible St) sont extraites (BLn-1, BLn,...), pour un coût de Rmin, correspondant au débit minimal décodable pour la résolution spatiale St. Après extraction des sous-flux de qualité de base, le débit autorisé devient Rt = Rt-Rmin.

L'extracteur parcourt ensuite les sous-bandes temporelles des résolutions spatiales inférieures et extrait les différentes couches de rehaussement EL de chaque sous-bande. Il effectue une boucle sur les sous-bandes temporelles de résolution spatiale inférieure, puis une boucle sur les couches de rehaussement de chaque sous-bande temporelle.

Soit Rf le débit nécessaire pour extraire une couche de qualité d'une sous-bande temporelle. Si le débit autorisé Rt > Rf, la couche de la sous-bande considérée est extraite et le débit devient Rt = Rt-Rf. Dans le cas contraire, la couche de la sous-bande considérée est tronquée et l'extraction est terminée.

Si toutes les couches des sous-bandes temporelles des résolutions spatiales inférieures ont pu être extraites, l'extracteur examine alors les sous-bandes du niveau de résolution spatiale St. L'extracteur effectue une boucle sur les couches de qualité FGS, puis sur les sous-bandes temporelles. Soit Rfs le débit nécessaire pour extraire une couche de qualité q pour toutes les sous-bandes temporelles. Si le débit autorisé Rt>Rfs, la couche de qualité q de toutes les sous-bandes est extraite et le débit devient Rt=Rt-Rfs. Dans le cas contraire, la couche de qualité q de toutes les sous-bandes est tronquée et l'extraction se termine.

La figure 6 représente l'ordre de traitement des informations par l'extracteur, ou module d'adaptation de qualité. Pour une extraction à une résolution spatiale de niveau n, l'extracteur parcourt d'abord tous les niveaux de qualité de base BL de tous les niveaux spatiaux (QCIF, CIF, etc.) du niveau 0 jusqu'au niveau n, puis les couches de qualité de rehaussement EL des résolutions spatiales inférieures (EL 0) jusqu'à n (EL n).

Le mécanisme d'extraction peut également être illustré par la figure 3 décrite précédemment en relation avec le mécanisme de prédiction, à l'aide des courbes débit/distorsion 30 et 31. On considère désormais le chemin suivi par l'extracteur du SVM MPEG-21 le long de ces courbes pour générer différents points de débits au décodage.

Ainsi, pour générer un point de débit au format QCIF, l'extracteur récupère tout d'abord la couche de base BL 301 du niveau QCIF. A partir du point minimal QCIF 305, il est ensuite possible d'extraire n'importe quel point de débit supérieur au point minimal QCIF 305 et inférieur au point de débit maximal 304 (qui est celui qui a été utilisé pour la prédiction de la couche de résolution spatiale supérieure au format CIF). Pour ce faire, la couche, ou sous-flux, de rehaussement (EL), constituée des passes FGS1302 et FGS2 303 est coupée selon le débit alloué.

Pour générer un point de débit au format CIF, deux solutions sont possibles selon que le débit demandé est supérieur au débit du point de référence 312 ou inférieur à celui-ci.

Si le débit cible est inférieur au débit du point de référence CIF 312, l'extracteur récupère les couches de base BL 301 et 311 des deux niveaux spatiaux QCIF et CIF, ce qui conduit au point de débit minimal CIF 313. Selon le débit restant, l'extracteur tronque les couches de rehaussement EL 302 et 303 du niveau de résolution spatiale QCIF.

Si le débit demandé est supérieur au débit du point de référence CIF 312, l'extracteur récupère les couches de base BL 301 et 311 des niveaux CIF et QCIF, la couche de rehaussement EL 302, 303 du niveau QCIF et coupe la couche de rehaussement CIF 314, 315 selon le débit restant.

### 3. Inconvénients de l'art antérieur

La technique de codage/décodage du modèle SVM du groupe de travail MPEG-21 présente différents inconvénients. En effet, le mécanisme d'extraction associé à cette technique présente plusieurs défauts.

Tout d'abord, on remarque qu'avec l'ordre de traitement des informations à l'extracteur (à savoir toutes les couches de base BL de niveaux spatiaux, puis les couches de rehaussement EL en allant du niveau spatial de base vers le niveau spatial demandé), l'extraction suit toujours le même chemin, quel que soit le point de débit demandé au décodage. Or ce chemin n'est pas toujours le chemin optimal pour chaque point de débit cible au décodage.

De plus, pour chaque niveau de résolution spatiale donnée à partir duquel a été réalisée une prédiction pour le codage d'un niveau de résolution spatiale supérieur, il existe un point de débit maximal qui correspond au point de débit utilisé pour la prédiction. Or ce point de débit maximal n'est pas toujours le point le plus haut que l'on désire atteindre pour ce niveau de résolution spatiale. En effet, le point de prédiction est choisi pour minimiser le résidu de prédiction lors du codage du niveau spatial supérieur, mais il ne correspond pas à un point de très haute qualité pour le niveau spatial courant. Il est souvent souhaitable ou nécessaire de disposer, notamment pour les résolutions spatiales basses, de points offrant une qualité de reconstruction d'image supérieure à celle donnée par le point de prédiction.

Enfin, un dernier inconvénient de la technique de codage du SVM MPEG-21 est que, pour une extraction à un niveau n de résolution spatiale (au format CIF par exemple), de points de débit inférieur au débit du point de référence de ce niveau (point référencé 312 par exemple sur la figure 3, i.e. le point obtenu par décodage des couches de base BL des niveaux spatiaux 0 à n et de toutes les couches de raffinement EL des niveaux 0 à n-1), aucune information de raffinement du niveau n (i.e. aucune information des couches de rehaussement EL 314 et 315 du niveau CIF par exemple) n'est utilisée.

### 4. Objectifs de l'invention

L'invention a notamment pour objectif de pallier ces inconvénients de l'art antérieur.

Plus précisément, un objectif de l'invention est de fournir une technique de codage et de décodage d'images et/ou de séquences vidéo échelonnable, reposant sur une organisation du flux de données par couches, avec prédiction inter-couches, qui constitue une amélioration de la technique du modèle SVM proposé par le groupe de travail MPEG-21 dans le document N6716 ISO/IEC JTC 1/SC 29/WG 11, intitulé "Scalable Video Model 3.0", Octobre 2004, Palma de Mayorque, Espagne.

Notamment, un objectif de l'invention est de fournir une telle technique qui permette, au décodage, la reconstruction d'images à un niveau de résolution n donné de meilleure qualité que selon l'art antérieur. Plus précisément, l'invention a pour objectif de fournir une telle technique qui permette d'atteindre au décodage, pour un niveau de résolution n-1 donné, un débit supérieur à celui utilisé pour le codage par prédiction du niveau de résolution n.

Un autre objectif de l'invention est de proposer une telle technique qui permette de définir, pour chaque point de débit, un chemin d'extraction optimal, c'est-à-dire le chemin offrant la meilleure reconstruction du point au sens débit/distorsion.

L'invention a encore pour objectif de fournir une telle technique qui soit simple à implémenter et peu coûteuse en termes de ressources (bande passante, capacités de traitement, etc.).

Un autre objectif de l'invention est de proposer une telle technique qui permette une compression efficace des données, tout en permettant une reconstruction de bonne qualité des images.

L'invention a encore pour objectif de fournir une telle technique qui permette de desservir de façon satisfaisante une pluralité d'utilisateurs disposant de modalités d'accès au flux de données différentes et de terminaux de visualisation de capacités de traitement diverses.

### 5. Caractéristiques essentielles de l'invention

Ces objectifs, ainsi que d'autres qui apparaîtront par la suite, sont atteints à l'aide d'un procédé de codage d'une image ou d'une séquence d'images, générant un flux de données présentant une structure hiérarchique de couches de données emboîtées de niveaux n successifs, où n est entier, chacun desdits niveaux n correspondant à une résolution prédéterminée desdites images. Un tel procédé comprend une étape de codage d'au moins l'une desdites couches, de niveau n+1, par prédiction au moins à partir de ladite couche de niveau n. Chacune desdites couches de données de niveau n permet de reconstruire une version desdites images à ladite résolution de niveau n de qualité maximum prédéterminée.

Selon l'invention, un tel procédé code également, pour l'une au moins desdites couches de données de niveau n, au moins un sous-flux supplémentaire, appelé sous-flux singulier (en anglais "dead substream"), permettant de reconstruire une version desdites images à ladite résolution de niveau n de qualité supérieure à ladite qualité maximum prédéterminée, et ledit sous-flux singulier de ladite couche de niveau n n'est pas utilisé lors de ladite étape de codage par prédiction desdites couches de niveau différent de n.

Ainsi, l'invention repose sur une approche tout à fait nouvelle et inventive du codage de flux d'images ou de flux vidéos échelonnables. En effet, alors que, selon l'art antérieur (tel que décrit notamment par le modèle SVM du groupe de travail MPEG-21), l'intégralité des données d'une couche de niveau de résolution n-1 était utilisée pour coder par prédiction la couche de niveau supérieur n, l'invention propose désormais de coder des informations supplémentaires associées au niveau de résolution n-1, qui ne seront utilisées, ni pour le codage par prédiction du niveau n, ni pour la reconstruction d'images au niveau de résolution n. Ces informations supplémentaires, codées dans un sous-flux singulier (ou "dead substream"), ne seront utilisées au décodage que pour la reconstruction d'images au niveau de résolution n-1.

En d'autres termes, en raisonnant à partir des courbes débit-distorsion associées à chacune des couches de données emboîtées du flux codé, l'invention propose de dissocier le point de débit maximum P_max de la courbe débit-distorsion d'une couche de niveau de résolution n-1 donné, du point de cette courbe, appelé point de prédiction P_pred, utilisé pour prédire la couche de données de résolution de niveau n. Le sous-flux singulier de la couche de niveau n permet donc de couvrir l'ensemble des débits situés entre le débit du point de prédiction P_pred et le débit du point maximum P_max.

Grâce à ce sous-flux singulier, on peut donc atteindre, au décodage, une reconstruction de l'image ou de la séquence vidéo au niveau de résolution n de qualité supérieure à celle de l'art antérieur, ce qui est particulièrement intéressant pour certains terminaux de visualisation, pour lesquels la qualité atteinte par reconstruction au niveau n à partir du point P_pred n'est pas suffisante.

Avantageusement, chaque couche de données de niveau n est codée sous la forme d'au moins un sous-flux de base BL, permettant de reconstruire une version de qualité de base des images à la résolution de niveau n et, éventuellement, d'au moins un sous-flux de rehaussement EL , permettant de raffiner la version de qualité de base, pour obtenir au moins une version de qualité rehaussée des images. Ladite qualité maximum prédéterminée est :

- la qualité de base si ledit sous-flux de rehaussement n'est pas codé ;
- ladite au moins une qualité rehaussée si au moins un sous-flux de rehaussement est codé.

En effet, certaines couches de données peuvent n'être codées que sous la forme d'un sous-flux de base, et d'autres peuvent comprendre également un ou plusieurs sous-flux de rehaussement. Le sous-flux singulier codé selon l'invention permet de reconstruire des images de qualité supérieure à la qualité maximale obtenue à partir du seul sous-flux de base ou du sous-flux de base et du ou des sous-flux de rehaussement s'il(s) existe(nt).

Selon une caractéristique avantageuse de l'invention, un tel procédé comprend également une première étape d'insertion dans ledit flux de données d'au moins une information permettant d'identifier ledit au moins un sous-flux singulier au sein dudit flux de données. Il est en effet nécessaire de pouvoir distinguer, au décodage, le point de débit maximum associé à un niveau n de résolution spatiale, du point de prédiction utilisé pour le codage du niveau de résolution spatiale supérieure n+1.

Selon une caractéristique préférentielle de l'invention, un tel procédé de codage met également en oeuvre, pour au moins certaines desdites images, une deuxième étape d'insertion dans ledit flux de données d'au moins une information de qualité de reconstruction associée à au moins certaines données d'au moins certaines desdites couches, ladite qualité de reconstruction étant fonction d'au moins un paramètre débit/distorsion.

L'insertion de cette information de qualité dans le flux permet une sélection adaptée de la qualité dans les différentes couches de résolution de niveau n. On définit ainsi, pour chaque point de débit visé au décodage, un chemin d'extraction optimal, c'est-à-dire le chemin qui permet la meilleure reconstruction de l'image à ce débit au sens débit-distorsion.

L'invention concerne aussi un dispositif de codage d'une image ou d'une séquence d'images, comprenant des moyens de génération d'un flux de données présentant une structure hiérarchique de couches de données emboîtées de niveaux n successifs, où n est entier, chacun desdits niveaux n correspondant à une résolution prédéterminée desdites images. Un tel dispositif comprend des moyens de codage d'au moins l'une desdites couches, de niveau n+1, par prédiction au moins à partir de ladite couche de niveau n, et chacune desdites couches de données de niveau n permet de reconstruire une version desdites images à ladite résolution de niveau n de qualité maximum prédéterminée.

Selon l'invention, un tel dispositif comprend également des moyens de codage, pour l'une au moins desdites couches de données de niveau n, d'au moins un sous-flux, appelé sous-flux singulier, permettant de reconstruire une version desdites images à ladite résolution de niveau n de qualité supérieure à ladite qualité maximum prédéterminée, et ledit sous-flux singulier de ladite couche de niveau n n'est pas utilisé par lesdits moyens de codage par prédiction desdites couches de niveau différent de n. Ce sous-flux singulier vient donc s'ajouter, pour la couche de niveau n, au sous-flux de base BL et éventuellement au(x) sous-flux de rehaussement EL qu'elle comprend.

Avantageusement, un tel dispositif de codage comprend un module d'extraction de point de prédiction permettant d'extraire, au sein de ladite couche de niveau n, des données à prendre en compte lors du codage par prédiction de ladite couche de niveau n+1. Ce module d'extraction de point de prédiction permet de déterminer le point, distinct du point de débit maximum, à utiliser pour réaliser le codage de la couche de niveau supérieur.

L'invention concerne encore un procédé, et le dispositif associé, de décodage d'un flux de données codé selon la technique de codage décrite ci-dessus, qui met en oeuvre, pour la reconstruction d'une desdites images à ladite résolution de niveau n, des étapes de :

- décodage desdites couches de données de niveau inférieur à n ;
- en fonction d'un débit de décodage autorisé, décodage au moins partiel de ladite couche de niveau n, et éventuellement dudit sous-flux singulier de ladite couche de niveau n,

lesdits sous-flux singuliers desdites couches de niveau inférieur à n n'étant pas décodés lors de ladite reconstruction.

Plus précisément, on décode tout d'abord les sous-flux de base des couches de niveau inférieur ou égal à n, puis les sous-flux de rehaussement des couches de niveau inférieur à n quand ils existent. Enfin, en fonction du débit de décodage autorisé, on décode au moins partiellement le ou les sous-flux de rehaussement de la couche de niveau n, et éventuellement le sous-flux singulier de cette couche.

L'invention concerne encore un signal de transmission d'un flux de données codé selon la technique décrite ci-dessus. Un tel signal est structuré en entités d'information au sein desquelles est véhiculé ledit flux de données, chacune desdites entités d'information comprenant un en-tête, renseignant sur un type de ladite entité d'information, et un champ de données utiles.

Selon l'invention, un tel signal véhicule également, pour l'une au moins desdites couches de données de niveau n, au moins un sous-flux, appelé sous-flux singulier, permettant de reconstruire une version desdites images à ladite résolution de niveau n de qualité supérieure à ladite qualité maximum prédéterminée, ledit sous-flux singulier de niveau n n'étant pas utilisé pour reconstruire lesdites images à une résolution de niveau différent de n.

Dans une première variante de réalisation, un tel signal véhicule ledit sous-flux singulier au sein d'au moins une entité d'information d'un premier type spécifique (par exemple le type 22 ou 23 des NALs, prévu par la syntaxe du modèle SVM), distinct du type desdites entités d'information véhiculant lesdits sous-flux de base et lesdits sous-flux de rehaussement.

Dans une deuxième variante de réalisation, au moins un desdits sous-flux singuliers et au moins un desdits sous-flux de rehaussement sont véhiculés au sein d'une entité d'information (NAL) de même type, et ledit signal véhicule au moins une information de coupure permettant d'identifier, au sein de ladite NAL, ledit sous-flux singulier et ledit sous-flux de rehaussement.

Lorsqu'on met en oeuvre, au codage, la variante présentée ci-dessus de sélection adaptée de la qualité, permettant la définition de chemins d'extraction optimaux, le signal de l'invention doit également véhiculer l'information de qualité de reconstruction associée, selon cette variante, à certaines données. Pour ce faire, deux solutions ont été envisagées.

Une première variante de réalisation consiste à modifier la structure des entités d'information existantes, à savoir les NALs, de façon à ce que certaines d'entre elles comprennent également un pseudo en-tête comprenant au moins un pointeur vers au moins certaines données dudit champ de données utiles, ledit pointeur renseignant sur un niveau de qualité de reconstruction associé auxdites données et fonction d'au moins un paramètre débit/distorsion.

Une seconde variante, qui est préférentielle puisqu'elle n'impose pas de modification de la structure des entités d'information existantes, consiste à introduire dans le signal au moins une entité d'information d'un type spécifique, comprenant au moins une information de qualité de reconstruction associée à au moins certaines données dudit flux, ladite qualité de reconstruction étant fonction d'au moins un paramètre débit/distorsion.

On introduit ainsi des NALs spécifiques, dites NALs d'information, qui contiennent dans leur champ de données utiles des décalages permettant d'identifier des niveaux de qualité dans une NAL de transport de données (à savoir une NAL transportant un sous-flux de rehaussement par exemple).

Ces NALs d'information peuvent également transporter une information d'identification de sous-flux singulier, lorsqu'elles contiennent une information supplémentaire indiquant quel est le niveau de qualité qui correspond au début d'un sous-flux singulier.

L'invention concerne également des programmes d'ordinateur comprenant des instructions de code de programme pour l'exécution des étapes du procédé de codage d'une image ou d'une séquence d'images et pour l'exécution des étapes du procédé de décodage d'un flux de données représentatif d'une image ou d'une séquence d'images décrits précédemment lorsque lesdits programmes sont exécutés dans ou par un microprocesseur.

L'invention concerne encore un module d'adaptation de qualité d'une image ou d'une séquence d'images, alimenté par un flux de données source représentatif d'une image ou d'une séquence d'images, tel que décrit précédemment.

Un tel module d'adaptation met en oeuvre des moyens de génération d'un flux de données modifié destiné à au moins un terminal de visualisation desdites images, ledit flux de données modifié étant obtenu, à partir dudit flux de données source, par extraction dudit sous-flux singulier de niveau n si ledit au moins un terminal de visualisation ne reconstruit pas lesdites images à ladite résolution de niveau n.

Un tel module d'adaptation, encore appelé extracteur, permet d'extraire du flux les sous-flux qui ne seront pas utilisés en reconstruction, du fait de la nature des terminaux desservis par exemple. Il peut se trouver directement en sortie du codeur, juste avant le décodeur (voire même être intégré dans le décodeur), ou encore être situé en un point quelconque du réseau de transmission par lequel les terminaux clients accèdent au flux.

L'invention concerne enfin un support de données destiné à stocker le flux de données précité, présentant une structure de mémorisation hiérarchique de couches de données emboîtées de ce flux. Un tel support de données comprend également, pour l'une au moins desdites couches de données de niveau n, au moins une zone de mémorisation d'au moins un sous-flux singulier, qui n'est pas lue lors de la reconstruction desdites images à une résolution de niveau différent de n.

## 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- les figures 1 à 6, déjà décrites en relation avec l'art antérieur, sont relatives au modèle SVM du groupe de travail MPEG-21. Plus précisément :

    - la figure 1 présente un synoptique du codeur MEPG-21 SVC décrit dans le document N6716 précité ;
    - la figure 2 illustre les différentes courbes débit-distorsion obtenues à partir du codeur de la figure 1 ;
    - la figure 3 décrit le mécanisme de prédiction/extraction proposé par le modèle SVM du groupe de travail MPEG-21, à partir des courbes débit/distorsion du type de celles de la figure 2 ;
    - la figure 4 illustre l'ordre de traitement des couches de données par le codeur de la figure 1 ;
    - la figure 5 présente un principe de chemins d'extraction emboîtés prévu par la norme MPEG ;
    - la figure 6 décrit l'ordre de traitement des couches de données à l'extraction précédant le décodage ;

- la figure 7 présente le principe d'insertion d'un sous-flux singulier au niveau de résolution n, sous forme de courbes débit-distorsion ;
- la figure 8 présente un synoptique du codeur de l'invention ;
- la figure 9 décrit l'organisation des données effectuée par le codeur de la figure 8 avec insertion d'un sous-flux singulier ;
- les figures 10 et 11 illustrent deux exemples d'extraction au format CIF et QCIF ;

- les figures 12 à 16 illustrent un mode de réalisation particulier de l'invention dans lequel, en sus des sous-flux singuliers, on découpe les images en niveaux de qualité successifs, utilisés lors de la reconstruction :

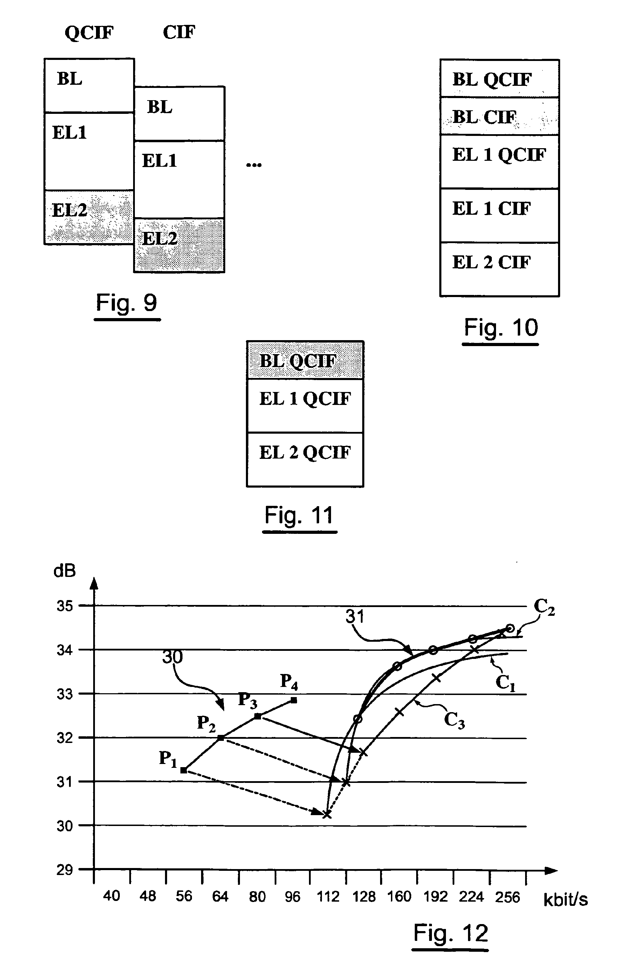

    - la figure 12 illustre la modification du mécanisme de prédiction/extraction de la figure 3 dans cette variante ;

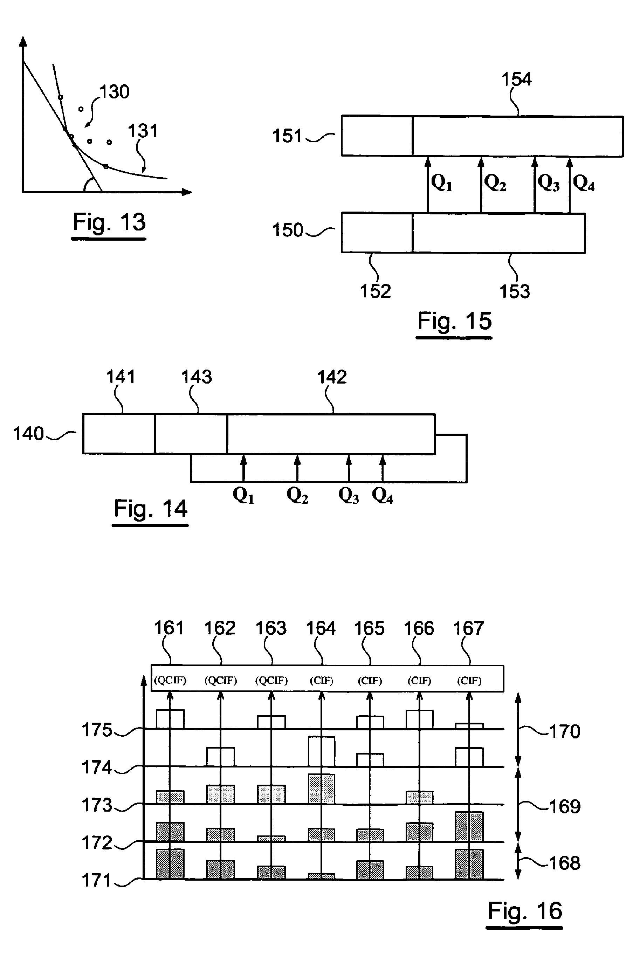

    - la figure 13 présente le principe d'établissement des points de troncature dans les sous-flux associés aux images ;
    - les figures 14 et 15 décrivent deux exemples de structure d'entités d'information, ou NALs, véhiculant les informations de qualité insérées dans le flux selon cette variante ;
    - la figure 16 présente un exemple de structure d'images en niveaux de qualité successifs ;

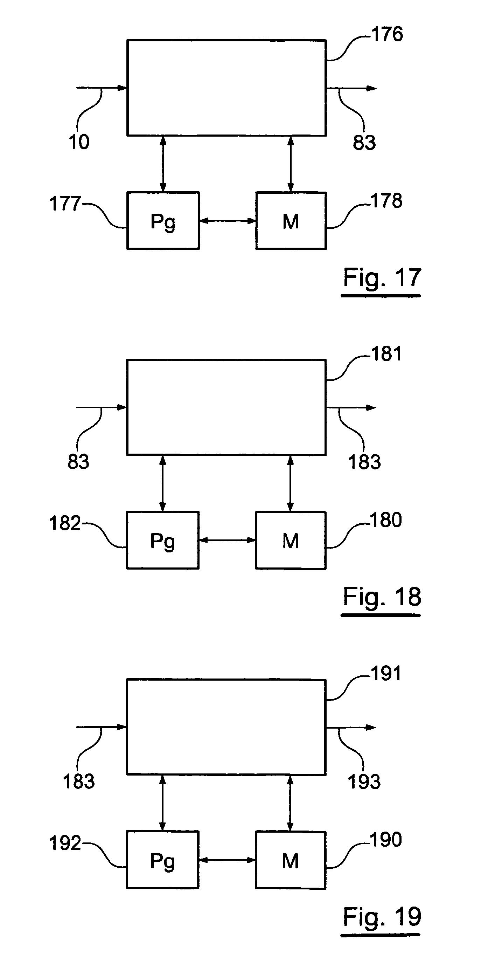

- les figures 17 à 19 présentent respectivement des schémas simplifiés des dispositifs de codage, module d'adaptation de la qualité des images et dispositif de décodage selon l'invention.

## 7. Description d'un mode de réalisation de l'invention

Le principe général de l'invention repose sur le codage d'un sous-flux supplémentaire dans certains ou tous les niveaux de résolution du flux, destiné à permettre la reconstruction d'une image de meilleure qualité à ce niveau de résolution. Ce sous-flux supplémentaire, appelé sous-flux singulier (en anglais "dead substream"), est utilisé au seul niveau de résolution pour lequel il est codé. En d'autres termes, au codage, il n'est pas utilisé pour la prédiction des couches d'autres niveaux de résolution, et, au décodage, il n'est pas utilisé pour la reconstruction des images à d'autres niveaux de résolution.

En considérant les courbes débit-distorsion associées à chacun des niveaux de résolution codés dans le flux, l'insertion d'un tel sous-flux singulier revient à dissocier le point de débit maximum d'un niveau de résolution du point de ce niveau utilisé pour la prédiction du niveau de résolution supérieur.

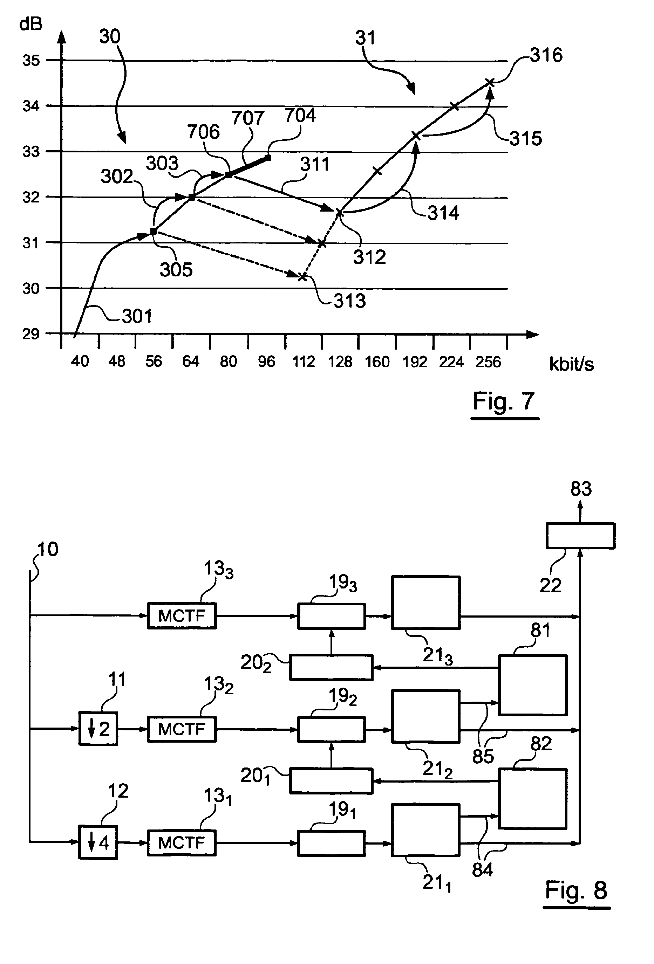

On présente, en relation avec la figure 7, un mode de réalisation de la technique de codage de l'invention, reposant sur l'ajout d'un sous-flux singulier dans une couche de données de résolution spatiale et/ou temporelle de niveau n donné.

Comme ci-dessus (voir figure 3), on s'intéresse au cas particulier du codage des images à deux formats de résolution emboîtés QCIF et CIF. L'Homme du Métier étendra sans difficulté cet enseignement au cas plus général de n niveaux de résolution successifs (par exemple QCIF, CIF, SD, HD, etc.). La figure 7 présente les courbes débit-distorsion pour ces deux formats (courbe référencée 30 pour le QCIF et courbe référencée 31 pour le CIF), avec en abscisse le débit exprimé en kbits/s et en ordonnée la distorsion exprimée sous forme de PSNR en dB. On notera que les mêmes éléments sont désignés par les mêmes références numériques sur les figures 3 et 7.

Le principe de l'invention consiste donc, au codage, à définir un point de débit maximal pour un niveau spatial n-1 (en l'espèce le point P_max référencé 704 pour la courbe débit-distorsion du format QCIF) différent du point utilisé pour la prédiction du niveau spatial n (à savoir le point P_pred 706 utilisé pour la prédiction du format CIF).

Pour ce faire, on réalise les étapes de codage suivantes :

- codage d'une couche de données de niveau spatial n-1 (QCIF) jusqu'à un point de débit maximal P_max 704 ;
- extraction d'un point de débit P_pred 706 du niveau n-1 (QCIF) ;
- introduction dans le flux codé global d'un sous-flux supplémentaire, appelé sous-flux singulier 707, pour le niveau spatial n-1 (QCIF) couvrant les débits de P_pred 706 à P_max 704. Ce flux ne sert qu'à la reconstruction de la séquence vidéo à certains points de débits du niveau de résolution n-1 (QCIF) et n'est pas utilisé pour la reconstruction de points de niveaux spatiaux supérieurs ou inférieurs ;
- introduction dans le flux global d'une information d'identification du sous-flux singulier, permettant, lors du décodage ou de l'extraction de données du flux, d'identifier la position du point de prédiction P_pred 706 sur la courbe débit-distorsion QCIF par rapport au point de débit maximum P_max 704 ;
- codage de la couche de données du niveau spatial n (CIF) en utilisant une prédiction du niveau spatial n-1 (QCIF) au point de débit P_pred 706.

Cette technique de codage entraîne donc l'apparition de nouveaux points sur la courbe débit-distorsion 30 associée au format de résolution spatiale QCIF, qui appartiennent à un sous-flux singulier 707 utilisé exclusivement pour la reconstruction d'images au format QCIF.

Lorsqu'un terminal souhaite décoder le flux de données global ainsi codé, on extrait de ce flux les données nécessaires à la reconstruction de la séquence vidéo, en fonction de la résolution spatio-temporelle et du débit souhaités par le terminal. Pour une reconstruction à un niveau de résolution n, on extrait un point de débit de ce niveau spatial n, en veillant à n'utiliser aucun des sous-flux singuliers des niveaux spatiaux différents de n (notamment des niveaux spatiaux inférieurs), mais en utilisant éventuellement le sous-flux singulier du niveau spatial n si le débit souhaité rend cette utilisation possible.

La figure 17 présente la structure simplifiée d'un dispositif de codage de l'invention, qui comprend une mémoire M 178, une unité de traitement 176, équipée par exemple d'un microprocesseur, et pilotée par le programme d'ordinateur Pg 177. A l'initialisation, les instructions de code du programme d'ordinateur 177 sont par exemple chargées dans une mémoire RAM avant d'être exécutées par le processeur de l'unité de traitement 176. L'unité de traitement 176 reçoit en entrée un contenu vidéo à coder 10. Le microprocesseur μP de l'unité de traitement 176 code la séquence vidéo 10 sous la forme d'un flux compressé 83 comprenant une pluralité de couches emboîtées de niveaux de résolution spatiale n successifs, selon les instructions du programme Pg 177. L'unité de traitement 176 délivre en sortie un flux de données compressé 83.

La figure 8 présente plus précisément la structure d'un codeur, permettant l'introduction de sous-flux singuliers à certains ou tous les niveaux de résolution spatiale. Comme on le notera, la structure d'un tel codeur ne diffère de celle du codeur SVC MPEG-21 présenté précédemment en relation avec la figure 1 que par la présence de modules d'extraction de points de prédiction 81 et 82. Les éléments identiques sont donc désignés par les mêmes références numériques sur les figures 1 et 8. Dans l'exemple de la figure 8, on se place dans un contexte de codage vidéo échelonnable basé sur une transformation en ondelettes temporelle avec compensation en mouvement et représentation par couches avec prédiction inter-couches.

Le codeur de la figure 8 fonctionne de la manière suivante :

**(i)** les données vidéo 10 reçues en entrée du codeur alimentent trois branches du codeur fonctionnant en parallèle, l'une sur laquelle les données subissent une décimation par quatre référencée 12, l'une sur laquelle les données subissent une décimation par deux référencée 11, et la dernière sur laquelle les données ne sont pas sous-échantillonnées et ne subissent aucune décimation ;

**(ii)** la séquence vidéo est tout d'abord encodée au format spatial de base (QCIF) à l'aide d'une transformée temporelle compensée en mouvement (MCTF) $13_1$, qui permet de générer des informations de texture sous forme de coefficients d'ondelettes (on notera que, par souci de simplification, on n'a pas représenté ici les modules de traitement des informations de mouvement de la séquence vidéo). Les coefficients transformés sont codés par prédiction $19_1$ par rapport à d'autres coefficients du même niveau spatial et d'un codage scalable entropique $21_1$. On obtient un sous-flux scalable représentant le niveau de résolution spatiale de base (sub-bistream0 référencé 84), de débit total R_r0_max où r0 représente le niveau spatial et max indique le point de débit le plus haut de la courbe débit-distorsion associée.

Le point de débit P_pred servant à la prédiction pour le codage du niveau spatial supérieur est extrait du sous-flux scalable codé par le module d'extraction de point de prédiction référencé 82 (encore appelé "Prediction Point Extraction"). Le débit du point P_ pred est inférieur au débit R_r0_max.

Le sous-flux extrait est décodé et interpolé $20_1$ pour servir de prédiction $19_2$ pour le niveau de résolution spatiale supérieur. Le sous-flux scalable 84 est envoyé au multiplexeur 22 qui se charge d'ordonner tous les sous-flux de tous les niveaux de résolution spatiale afin de former le flux final 83.

**(iii)** La vidéo est ensuite encodée à une résolution spatiale supérieure (CIF) à l'aide d'une transformée temporelle compensée en mouvement (MCTF) $13_2$ ; les coefficients transformés sont prédits $19_2$ à l'aide des coefficients d'ondelettes du même niveau spatial (CIF) ou de coefficients du signal interpolé $20_1$ venant du niveau spatial inférieur. La prédiction $19_2$ est suivie d'un codage entropique scalable $21_2$ et un sous-flux scalable 85 représentant le niveau de résolution spatiale r1 est obtenu, de débit maximum R_r1_max. Ce sous-flux 85 est envoyé au multiplexeur 22. Le point de débit utilisé pour la prédiction du niveau spatial supérieur est ensuite extrait du sous-flux codé 85 par le module d'extraction de point de prédiction 81 et interpolé $20_2$.

On procède de la même façon pour les niveaux spatiaux supérieurs, à ceci près qu'aucun point de prédiction n'est extrait pour le dernier niveau spatial.

La figure 9 illustre les données générées par le codeur de la figure 8, dans l'exemple particulier où l'on ne considère que deux niveaux de résolution spatiale distincts, à savoir QCIF et CIF (en d'autres termes, on ne considère que les sous-flux issus des deux branches inférieures du codeur de la figure 8, procédant respectivement à des décimations par deux et par quatre des données vidéo 10 en entrée).

Dans chaque couche de données d'un niveau de résolution spatiale (QCIF et CIF), les données sont organisées en plusieurs sous-couches : une sous-couche de base BL (Base Layer), suivie d'une première sous-couche de rehaussement (Enhancement Layer 1, ou EL1) et d'une deuxième sous-couche de rehaussement (Enhancement Layer 2, ou EL2). Les deux premières sous-couches (BL et EL1) sont utilisées au codage pour la prédiction d'un niveau spatial supérieur et au décodage pour la reconstruction de points du niveau spatial courant et des niveaux spatiaux supérieurs.

La deuxième sous-couche de rehaussement (EL2) est utilisée uniquement pour la reconstruction de points du niveau spatial courant. Cette deuxième sous-couche de rehaussement représente le sous-flux singulier.

On notera que la figure 9 illustre un exemple particulier de réalisation, dans lequel chaque couche de données comprend au moins un sous-flux de rehaussement EL1, en plus du sous-flux supplémentaire EL2 proposé par l'invention. Il est bien sûr également possible que certaines couches de données de certains niveaux spatiaux ne soient codées que sous la forme d'un sous-flux de base BL, auquel l'invention ajoute un sous-flux singulier dans une unique sous-couche de rehaussement EL.

Lorsqu'un sous-flux singulier est ajouté par le codeur dans une couche de données de niveau de résolution spatiale n donné, il est nécessaire de le signaler par insertion d'une information spécifique dans le flux de données global, afin que ce sous-flux singulier puisse être exploité au décodage.

On présente ci-après un exemple d'insertion d'une telle information spécifique relative à la présence d'un sous-flux singulier dans le flux de données global. On rappelle au préalable la structure du flux de données proposée dans le cadre du SVM de MPEG-21.

Dans l'implémentation du SVM, le flux est structuré en entités d'information, appelées NAL (pour "Network Adaptation Layer", ou couche d'adaptation réseau). Une NAL est une unité de transport au sens de la norme H264 (ITU-T et ISO/IEC JTC1, "Advanced Video Coding for Generic Audiovisual Services," ITU-T Recommendation H.264-ISO/IEC 14496-10 AVC, 2003). C'est un paquet comportant un en-tête et un nombre entier d'octets de données (encore appelé "payload").

L'en-tête d'une NAL comporte un octet de type, permettant de qualifier le type de la NAL. Le champ de données utile, ou "payload", sert à véhiculer un flux correspondant au codage d'un niveau spatial, d'un niveau temporel et d'un niveau de qualité (niveau de base ou niveau FGS) pour une image de sous-bande ou une partie d'image. Dans la syntaxe du SVM, une NAL peut avoir plusieurs types : notamment, les types 20 et 21 sont réservés pour décrire une NAL dont le contenu est un sous-flux de rehaussement d'une image (intra ou non intra).

L'introduction d'un sous-flux singulier dans le flux correspondant à l'introduction d'un sous-flux de rehaussement supplémentaire, comme expliqué précédemment en relation avec la figure 9 (sous-couche EL2), ce sous-flux singulier est donc transmis dans une NAL. Tout type de NAL dont l'utilisation n'a pas encore été imposée par la syntaxe du SVM peut servir à désigner une NAL véhiculant un sous-flux singulier, comme par exemple les types 22 ou 23.

Dans une autre variante de réalisation de l'invention, on peut aussi envisager de véhiculer dans une même NAL, le sous-flux singulier d'une couche de niveau n, et le sous-flux de rehaussement, si ce dernier existe. En d'autres termes, les sous-couches EL1 et EL2 sont alors regroupées dans une même NAL, et une information supplémentaire indique où se situe le point de coupure dans la NAL entre les sous-flux EL1 et EL2.

On s'attache désormais à décrire, en relation avec les figures 10 et 11, le principe de fonctionnement d'un module d'adaptation de la qualité des images, encore appelé extracteur. On rappelle qu'un tel extracteur peut être situé directement en sortie du codeur, juste avant le décodeur, ou encore en un point quelconque du réseau de transmission par lequel un client accède au flux de données codé. Il permet d'extraire du flux global certaines données qui ne sont pas utiles pour les clients finaux qu'il dessert. Plus précisément, l'extracteur du SVM étudie les caractéristiques de chaque NAL (niveau spatial, temporel, FGS) et garde ou tronque les NALs utilisées pour le décodage à un débit et à un format (ou niveau de résolution spatio-temporelle) donnés.

Selon l'invention, l'introduction de sous-flux singuliers modifie la lecture des entêtes de NALs par l'extracteur de la manière suivante :

Soient nivSpatialDec le niveau de résolution spatiale demandé au décodage,
nivSpatialNAL, le niveau de résolution spatiale de la NAL courante,
typeNAL, le type de la NAL courante
Si(typeNAL == 22 ∥ typeNAL == 23)et nivSpatialDec == nivSpatialNAL)
{Extraction de la NAL }

En d'autres termes, le fonctionnement de l'extracteur est modifié pour que ce dernier extraie également du flux de données global les NALs véhiculant les sous-flux singuliers du niveau de résolution spatiale que l'on souhaite atteindre au décodage. Les figures 10 et 11 présentent deux exemples d'extraction, respectivement pour une reconstruction de la séquence vidéo au format CIF et QCIF, dans le cas où l'on considère ces deux seuls niveaux de résolution spatiale successifs.

Pour une reconstruction des images au format CIF, le décodeur utilise les sous-flux de base des deux niveaux spatiaux (BL QCIF et BL CIF), les premières couches de rehaussement des deux niveaux spatiaux (Enhancement Layer EL1 QCIF et Enhancement Layer EL1 CIF) ainsi que la deuxième couche de rehaussement du niveau CIF (Enhancement Layer EL2 CIF). L'extracteur doit donc extraire du flux global l'ensemble des sous-couches représentées sur la figure 10, dans cet ordre pour les insérer dans un flux modifié. En fonction du débit utilisé pour la reconstruction du point, les différentes sous-couches peuvent être tronquées, i.e. les sous-flux correspondants peuvent n'être décodés qu'en partie (par exemple, décodage partiel du sous-flux de rehaussement EL1 CIF, et dans ce cas, le sous-flux singulier EL2 CIF n'est pas utilisé, le débit ne le permettant pas).

Pour une reconstruction au format QCIF, le décodeur utilise le sous-flux de base du niveau QCIF (Base Layer QCIF) et les deux sous-flux de rehaussement du niveau QCIF (Enhancement Layer EL1 QCIF et Enhancement Layer EL2 QCIF), comme illustré par la figure 11. A nouveau, les différentes couches BL QCIF, EL1 QCIF et EL2 QCIF peuvent être tronquées, en fonction du débit alloué pour la reconstruction des images au format QCIF.

La figure 18 présente la structure simplifiée d'un tel extracteur, ou module d'adaptation de la qualité des images, qui comprend une mémoire M 180, une unité de traitement 181, équipée par exemple d'un microprocesseur, et pilotée par le programme d'ordinateur Pg 182. A l'initialisation, les instructions de code du programme d'ordinateur 182 sont par exemple chargées dans une mémoire RAM avant d'être exécutées par le processeur de l'unité de traitement 181. L'unité de traitement 181 reçoit en entrée un flux de données compressé 83, organisé selon une structure hiérarchique de couches emboîtées de niveaux de résolution n successifs. Le microprocesseur μP de l'unité de traitement 181 extrait du flux de données 83 l'ensemble des sous-flux qui ne seront pas utilisés au décodage (en fonction de la nature des terminaux cibles par exemple, ou de la qualité souhaitée en reconstruction), selon les instructions du programme Pg 182. L'unité de traitement 181 délivre en sortie un flux de données modifié 183, adapté aux capacités de traitement des terminaux clients ou aux contraintes du réseau de transmission.

Dans la variante de réalisation de l'invention, dans laquelle les sous-flux singuliers sont véhiculés par des NALs de type 22 ou 23, le décodeur proposé dans le cadre du modèle SVM de MPEG-21 doit être modifié de manière à décoder les NALs de type 22 et 23 :
Si (typeNAL == 20 ∥ typeNAL == 21 ∥ typeNAL == 22 ∥ typeNAL == 23) { Décoder NAL}

On présente désormais, en relation avec les figures 12 à 16, une variante de réalisation de l'invention, mettant en oeuvre, en sus de l'insertion de sous-flux singuliers, une sélection adaptée de la qualité dans les couches spatiales. La sélection adaptée de la qualité dans les couches de données de niveaux n successifs permet de définir pour chaque point de débit que l'on souhaite atteindre au décodage, un chemin d'extraction optimal, c'est-à-dire le chemin offrant la meilleure reconstruction du point au sens débit/distorsion. Cette variante de l'invention repose sur la définition et l'insertion de cellules informatives dans le flux global.

L'utilisation de chemins d'extraction adaptés permet d'améliorer encore la technique d'extraction de l'invention, de la manière suivante :

- on calcule pour plusieurs points de débit de chaque niveau de résolution spatio-temporelle N (i.e. pour chaque courbe débit-distorsion), une valeur représentative de leur qualité comprise entre un minimum QNmin et un maximum QNmax. Ce calcul peut être effectué :

  - soit au moment du codage de chaque couche de résolution spatiale ;
  - soit après le codage de toutes les couches des différents niveaux spatiaux.

- on insère ensuite dans le flux global une information permettant de retrouver cette mesure de qualité à l'extraction précédant le décodage :

  - soit en insérant cette information dans les entités de données du flux codé elles-mêmes, i.e.

dans les NALs véhiculant les sous-flux de base ou de rehaussement ;

- soit en insérant cette information dans une entité séparée des entités de données du flux codé.

- au moment de l'extraction d'un point de débit R correspondant à une qualité Q d'un niveau spatial n, on extrait ensuite les entités de données correspondant à cette qualité pour tous les niveaux spatiaux inférieurs ou égaux à n en veillant à ce qu'aucun flux singulier de niveau inférieur à n ne soit utilisé.

Ainsi, selon cette variante, un sous-flux indépendant est créé pour chaque image. Chacun de ces sous-flux est parcouru pour déterminer, pour chaque image, le point de troncature qui permet d'obtenir une qualité et/ou un débit donné. Le flux final est donc composé d'une certaine quantité de "niveaux" de qualité.

La figure 12 présente plus précisément la modification du mécanisme de prédiction/extraction induite par cette variante de l'invention fondée sur la mise en oeuvre de chemins d'extraction optimaux. A nouveau, on se place dans le contexte particulier de deux niveaux de résolution spatio-temporelle successifs QCIF et CIF. On considère les courbes débit-distorsion associées à ces deux niveaux, avec en abscisse le débit exprimé en kbits/s et en ordonnée le PSNR exprimé en dB.

On considère quatre points P1, P2, P3 et P4 disponibles sur la courbe de niveau N-1 (QCIF) référencée 30. Ces quatre points P1 à P4 sont considérés comme des prédicteurs possibles pour la courbe de niveau N (CIF).

Ainsi, le point P1 permet d'obtenir par prédiction la courbe C1, alors que les courbes C2 et C3 sont respectivement issues d'une prédiction par les points P2 et P3. La courbe référencée 31 correspond à la courbe obtenue par prédiction à partir du point de débit maximum P4 du niveau QCIF, et représente donc la courbe de niveau CIF obtenue à partir du codeur SVC MPEG-21 de l'art antérieur.

A partir des différentes courbes C1 à C3, on peut sélectionner le meilleur point de prédiction de la courbe QCIF 30 (au sens débit-distorsion) correspondant à chaque débit cible : ainsi, la distorsion minimale à un débit de 128kbits/s est atteinte sur la courbe C1, de sorte que le point de débit 128kbits/s est prédit au mieux à partir du point de prédiction P1 ; de même, la distorsion minimale pour le point de débit 192kbits/s est atteinte sur la courbe C3, de sorte que ce point de débit est prédit au mieux à partir du point de prédiction P3.

On obtient de cette manière des courbes de "qualité" formées d'un point de la courbe de niveau N (CIF) et de son prédicteur optimal de la courbe de niveau N-1 (QCIF) au sens de l'algorithme (qui peut être différent de celui utilisé au codeur).

Les chemins d'extraction optimaux sont déterminés par une étape de traitement supplémentaire au niveau du codeur. Comme indiqué ci-dessus, cette étape peut être mise en oeuvre pendant le codage, ou peut être indépendante du codeur car réalisée après codage/compression des données.

On présente plus en détail ci-après, en relation avec la figure 13, un exemple de calcul de la qualité associée à un point de débit, mis en oeuvre au codeur ou dans un post-processeur.

On dispose d'un ensemble d'"images" (résiduelles ou non) que l'on découpe en un ou plusieurs niveaux de qualité (à savoir un niveau de base et un ou plusieurs niveaux de rehaussement ou d'amélioration), répartis dans des NALs. On suppose que les NALs $N_i$ peuvent être tronquées à des sous-points $n_i$ (ce qui s'applique principalement aux sous-flux de rehaussement) générant un débit $R_i^n$ pour une distorsion $D_i^n$. On suppose aussi, par simplification, que la mesure de distorsion est additive.

On cherche la façon optimale de découper les NALs d'une image en i points $n_i^\lambda$, de façon à minimiser la distorsion, avec comme contrainte le débit maximum que l'on peut atteindre pour le niveau de résolution spatio-temporelle considéré. On cherche donc à minimiser sur l'image la quantité :

$$D(\lambda) + \lambda R(\lambda) = \sum_i (D_i^{n_i^\lambda} + \lambda R_i^{n_i^\lambda})$$

En pratique, on définit un certain nombre de points de troncature possibles dans chaque NAL (par exemple k points, mais de manière non limitative à la fin de chaque passe du codeur entropique).

Comme illustré par la figure 13, qui présente en abscisse le débit et en ordonnée la distorsion, on considère le nuage de points référencé 130 obtenu pour l'ensemble de l'image à partir d'un ensemble d'entités d'information ou NALs. On détermine dans un premier temps les points de ce nuage 130 appartenant à la courbe débit-distorsion du niveau de résolution spatio-temporelle considéré, selon la technique décrite notamment dans le document de David Taubman intitulé "High Performance Scalable Image Compression with EBCOT" (en français "compression d'images échelonnable à haute performance avec EBCOT"), auquel on pourra se référer pour plus de détail. On recherche donc l'enveloppe convexe 131 sur laquelle s'inscrivent ces points d'un niveau de résolution spatio-temporelle donné.

Pour un λ, donné, c'est-à-dire pour une qualité donnée, l'algorithme est le suivant :

Initialiser $n_i^\lambda = 0$

Pour j = $j_1, j_2 ,... j_k$

$$\Delta R_i^j = R_i^j - R_i^{n^\lambda} ; \Delta D_i^j = D_i^{n^\lambda} - D_i^j$$

Si $\Delta R_i^j / \Delta D_i^j > \lambda$ , alors $n_i^\lambda = j$

On stocke alors, pour chaque point identifié de la courbe, la valeur de débit $\Delta R_i^j$ et la valeur de la pente en ce point $S_i^j = \Delta R_i^j / \Delta D_i^j$ .

Pour pouvoir exploiter au décodage ces différents niveaux de qualité, i.e. pour pouvoir réaliser une troncature d'une NAL en un point particulier lié au niveau de qualité que l'on souhaite atteindre, il est nécessaire d'inscrire dans le flux de données global une deuxième information spécifique qui, en sus de l'information d'identification d'un sous-flux singulier, permet d'identifier ces niveaux de qualité.

Pour ce faire, deux modes de réalisation sont proposés par l'invention, l'un dans lequel les couples (débit,qualité) associés aux points retenus lors de l'établissement des points de troncature sont stockés directement dans des NAL de données (i.e. les NALs véhiculant les sous-flux de base et de rehaussement), et l'autre dans lequel ces couples sont inscrits dans des NALs spécifiques, appelées NALs d'information. La qualité $Q_i$ associée à un point est calculée en fonction de la pente $S_i^j$ telle que définie plus haut. $(Q_i = f(S_i^j))$.

Dans le premier mode de réalisation illustré par la figure 14, on insère, entre l'en-tête 141 et le champ de données utile (payload) 142 d'une NAL de données 140, un pseudo-en-tête 143 contenant des pointeurs (par exemple sous la forme de valeurs de décalage ou offset) sur les différents niveaux de qualité identifiés lors de la recherche des points de troncature de la figure 13. Un pointeur (offset) est équivalent à une valeur de débit et correspond à une valeur de qualité $Q_1$, $Q_2$ à $Q_4$, et est symbolisé par une flèche vers le champ de données utile sur la figure 14.

Dans le deuxième mode de réalisation illustré par la figure 15, on utilise un nouveau type de NALs, appelé NALs d'information 150, permettant de repérer les niveaux de qualité à l'intérieur d'une NAL de données 151 du flux global. Comme une NAL de données 151, une telle NAL d'information 150 comprend un en-tête 152 et un champ de données utile 153. Par exemple, lorsque l'on souhaite proposer dix niveaux de qualité distincts $Q_1$ à $Q_{10}$, on construit une NAL d'information comprenant dans sa "payload" 153 dix entiers, indiquant chacun un décalage, ou offset, dans le champ de données utiles 154 de la NAL de données 151.

Lorsqu'on souhaite reconstruire la séquence vidéo à un niveau de qualité $Q_{ext}$, on extrait les données nécessaires du flux compressé global. Pour cela, l'extracteur (ou module d'adaptation de qualité d'image) recherche dans chacune des NALs le niveau de qualité le plus proche du niveau $Q_{ext}$ (i.e. le niveau de qualité inférieure ou égale à celle de $Q_{ext}$).

La figure 16 illustre un exemple de structure d'images en niveaux de qualité successifs. On considère sept images référencées 161 à 167, dont les trois premières 161 à 163 sont au format de résolution QCIF et les quatre dernières 164 à 167 sont au format CIF. Chacune de ces images est codée sous la forme d'un sous-flux de base BL 168, d'un premier sous-flux de rehaussement EL1 169 et d'un deuxième sous-flux de rehaussement EL2 170, correspondant à un sous-flux singulier. On distingue, au sein de chacune des ces images, cinq niveaux de qualité successifs référencés 171 à 175, qui correspondent à des points de troncature des entités d'information, ou NALs, véhiculant les données de reconstruction des images.

Comme on peut le constater sur la figure 16, le niveau de qualité le plus bas 171 correspond au sous-flux de base BL 168. Le décodage du premier sous-flux de rehaussement EL1 permet d'atteindre le niveau de qualité intermédiaire référencé 173, et le décodage du sous-flux singulier EL2 170, le niveau de qualité maximale 175.

Ainsi, pour un décodage en CIF, si la qualité demandée à l'extracteur est $Q_{ext}=3$, les trois niveaux de qualité inférieurs 171, 172 et 173 seront utilisés en entier pour chaque image. Si en revanche la qualité demandée à l'extracteur est $Q_{ext}=4$, on décodera intégralement les trois niveaux de qualité inférieurs 171, 172 et 173 pour chaque sous-bande CIF et QCIF, ainsi que le niveau de qualité référencé 174 pour les sous-bandes CIF seulement.

Dans cette variante de réalisation à base de niveaux de qualité, l'extracteur, ou module d'adaptation de qualité d'image, réalise la troncature des entités d'information au point optimal par rapport au niveau de qualité souhaité en reconstruction (on notera que cette troncature est adaptative par image ou sous-bande). Le décodeur reçoit donc des NALs qui ont été préalablement tronquées au "meilleur" point, et qu'il ne lui reste plus qu'à décoder pour reconstruire la séquence vidéo.

La figure 19 présente la structure simplifiée d'un tel décodeur, qui comprend une mémoire M 190, une unité de traitement 191, équipée par exemple d'un microprocesseur, et pilotée par le programme d'ordinateur Pg 192. A l'initialisation, les instructions de code du programme d'ordinateur 192 sont par exemple chargées dans une mémoire RAM avant d'être exécutées par le processeur de l'unité de traitement 191. L'unité de traitement 191 reçoit en entrée en ensemble de paquets de données 183, ou entités d'information à décoder, par exemple un ensemble de NALs tronquées au point de débit optimal, en fonction de la qualité de reconstruction que l'on souhaite atteindre. Le microprocesseur $\mu$P de l'unité de traitement 191 décode les entités d'information reçues 183, selon les instructions du programme Pg 192. L'unité de traitement 191 délivre en sortie une séquence vidéo reconstruite 193, adaptée aux capacités de traitement du terminal de visualisation du client.

## Revendications

1. Procédé de codage d'une image ou d'une séquence d'images,

   générant un flux de données présentant une structure hiérarchique de couches de données emboîtées de niveaux n successifs, où n est entier, chacun desdits niveaux n correspondant à une résolution prédéterminée desdites images,

   ledit procédé comprenant une étape de codage d'au moins l'une desdites couches, de niveau n+1, par prédiction au moins à partir de ladite couche de niveau n,

   chacune desdites couches de données de niveau n permettant de reconstruire une version desdites images à ladite résolution de niveau n de qualité maximum prédéterminée,

   **caractérisé en ce que** ledit procédé code également, pour l'une au moins desdites couches de données de niveau n, au moins un sous-flux, appelé sous-flux singulier, permettant de reconstruire une version desdites images à ladite résolution de niveau n de qualité supérieure à ladite qualité maximum prédéterminée,

   et **en ce que** ledit sous-flux singulier de ladite couche de niveau n n'est pas utilisé lors de ladite étape de codage par prédiction desdites couches de niveau différent de n.

2. Procédé de codage selon la revendication 1, **caractérisé en ce qu'**il code lesdites couches de données de niveau n sous la forme d'au moins un sous-flux de base, permettant de reconstruire une version de qualité de base desdites images à ladite résolution de niveau n et, pour l'une au moins desdites couches de données de niveau n, d'au moins un sous-flux de rehaussement, permettant de raffiner ladite version de qualité de base, pour obtenir au moins une version de qualité rehaussée desdites images,

   et **en ce que** ladite qualité maximum prédéterminée est :

   - ladite qualité de base si ledit sous-flux de rehaussement n'est pas codé ;
   - ladite au moins une qualité rehaussée si au moins un sous-flux de rehaussement est codé.

3. Procédé de codage selon l'une quelconque des revendications 1 et 2, **caractérisé en ce qu'**il comprend également une première étape d'insertion dans ledit flux de données d'au moins une information permettant d'identifier ledit au moins un sous-flux singulier au sein dudit flux de données.

4. Procédé de codage selon l'une quelconque des revendications 1 à 3, **caractérisé en ce qu'**il met également en oeuvre, pour au moins certaines desdites images, une deuxième étape d'insertion dans ledit flux de données d'au moins une information de qualité de reconstruction associée à au moins certaines données d'au moins certaines desdites couches, ladite qualité de reconstruction étant fonction d'au moins un paramètre débit/distorsion.

5. Dispositif de codage d'une image ou d'une séquence d'images,

   comprenant des moyens de génération d'un flux de données présentant une structure hiérarchique de couches de données emboîtées de niveaux n successifs, où n est entier, chacun desdits niveaux n correspondant à une résolution prédéterminée desdites images,

   ledit dispositif comprenant des moyens de codage d'au moins l'une desdites couches, de niveau n+1, par prédiction au moins à partir de ladite couche de niveau n,

   chacune desdites couches de données de niveau n permettant de reconstruire une version desdites images à ladite résolution de niveau n de qualité maximum prédéterminée,

   **caractérisé en ce que** ledit dispositif comprend également des moyens de codage, pour l'une au moins desdites couches de données de niveau n, d'au moins un sous-flux, appelé sous-flux singulier, permettant de reconstruire une version desdites images à ladite résolution de niveau n de qualité supérieure à ladite qualité maximum prédéterminée,

   et **en ce que** ledit sous-flux singulier de ladite couche de niveau n n'est pas utilisé par lesdits moyens de codage par prédiction desdites couches de niveau différent de n.

6. Dispositif de codage selon la revendication 5, **caractérisé en ce qu'**il comprend un module d'extraction de point de prédiction permettant d'extraire, au sein de ladite couche de niveau n, des données à prendre en compte lors du codage par prédiction de ladite couche de niveau n+1.

7. Procédé de décodage d'un flux de données représentatif d'une image ou d'une séquence d'images, ledit flux de données présentant une structure hiérarchique de couches de données emboîtées de niveaux n successifs, où n est entier, chacun desdits niveaux n correspondant à une résolution prédéterminée desdites images,

   chacune desdites couches de données de niveau n dudit flux permettant de reconstruire une version desdites images à ladite résolution de niveau n de qualité maximum prédéterminée, l'une au moins desdites couches, de niveau n+1, ayant été codée par prédiction au moins à partir de ladite couche de niveau n,

   **caractérisé en ce que**,

   ledit flux de données comprenant, pour l'une au moins desdites couches de données de niveau n, au moins un sous-flux, appelé sous-flux singulier, permettant de reconstruire une version desdites images à ladite résolution de niveau n de qualité supérieure à ladite qualité maximum prédéterminée, ledit procédé met en oeuvre, pour la reconstruction d'une desdites images à ladite résolution de niveau n, des étapes de :

- décodage desdites couches de données de niveau inférieur à n ;
- en fonction d'un débit de décodage autorisé, décodage au moins partiel de ladite couche de niveau n, et éventuellement dudit sous-flux singulier de ladite couche de niveau n,

lesdits sous-flux singuliers desdites couches de niveau inférieur à n n'étant pas décodés lors de ladite reconstruction.

8. Dispositif de décodage d'un flux de données représentatif d'une image ou d'une séquence d'images, ledit flux de données présentant une structure hiérarchique de couches de données emboîtées de niveaux n successifs, où n est entier, chacun desdits niveaux n correspondant à une résolution prédéterminée desdites images, chacune desdites couches de données de niveau n dudit flux permettant de reconstruire une version desdites images à ladite résolution de niveau n de qualité maximum prédéterminée, l'une au moins desdites couches, de niveau n+1, ayant été codée par prédiction au moins à partir de ladite couche de niveau n, **caractérisé en ce que**, ledit flux de données comprenant, pour l'une au moins desdites couches de données de niveau n, au moins un sous-flux, appelé sous-flux singulier, permettant de reconstruire une version desdites images à ladite résolution de niveau n de qualité supérieure à ladite qualité maximum prédéterminée, ledit dispositif de décodage met en oeuvre, pour la reconstruction d'une desdites images à ladite résolution de niveau n :

- des moyens de décodage desdites couches de niveau inférieur à n ;
- en fonction d'un débit de décodage autorisé, des moyens de décodage au moins partiel de ladite couche de niveau n, et éventuellement dudit sous-flux singulier de ladite couche de niveau n,

lesdits sous-flux singuliers desdites couches de niveau inférieur à n n'étant pas décodés lors de ladite reconstruction.

9. Signal de transmission d'un flux de données représentatif d'une image ou d'une séquence d'images, ledit flux de données présentant une structure hiérarchique de couches de données emboîtées de niveaux n successifs, où n est entier, chacun desdits niveaux n correspondant à une résolution prédéterminée desdites images, l'une au moins desdites couches, de niveau n+1, ayant été codée par prédiction au moins à partir de ladite couche de niveau n, chacune desdites couches de données de niveau n dudit flux permettant de reconstruire une version desdites images à ladite résolution de niveau n de qualité maximum prédéterminée, ledit signal étant structuré en entités d'information au sein desquelles est véhiculé ledit flux de données, chacune desdites entités d'information comprenant un en-tête, renseignant sur un type de ladite entité d'information, et un champ de données utiles, **caractérisé en ce que** ledit signal véhicule également, pour l'une au moins desdites couches de données de niveau n, au moins un sous-flux, appelé sous-flux singulier, permettant de reconstruire une version desdites images à ladite résolution de niveau n de qualité supérieure à ladite qualité maximum prédéterminée, ledit sous-flux singulier de niveau n n'étant pas utilisé pour reconstruire lesdites images à une résolution de niveau différent de n.

10. Signal selon la revendication 9, **caractérisé en ce qu'**il comprend également au moins une entité d'information d'un type spécifique, comprenant au moins une information de qualité de reconstruction associée à au moins certaines données dudit flux, ladite qualité de reconstruction étant fonction d'au moins un paramètre débit/distorsion.

11. Programme d'ordinateur comprenant des instructions de code de programme pour l'exécution des étapes du procédé de codage d'une image ou d'une séquence d'images selon l'une quelconque des revendications 1 à 4 lorsque ledit programme est exécuté dans ou par un microprocesseur.

12. Programme d'ordinateur comprenant des instructions de code de programme pour l'exécution des étapes du procédé de décodage d'un flux de données représentatif d'une image ou d'une séquence d'images selon la revendication 7 lorsque ledit programme est exécuté par un microprocesseur.

13. Module d'adaptation de qualité d'une image ou d'une séquence d'images, ledit module d'adaptation étant alimenté par un flux de données source représentatif d'une image ou d'une séquence d'images, ledit flux de données source présentant une structure hiérarchique de couches de données emboîtées de niveaux n successifs, où n est entier, chacun desdits niveaux n correspondant à une résolution prédéterminée desdites images,

chacune desdites couches de données de niveau n dudit flux permettant de reconstruire une version desdites images à ladite résolution de niveau n de qualité maximum prédéterminée, l'une au moins desdites couches, de niveau n+1, ayant été codée par prédiction au moins à partir de ladite couche de niveau n,

**caractérisé en ce que**,

ledit flux de données source comprenant, pour l'une au moins desdites couches de données de niveau n, au moins un sous-flux, appelé sous-flux singulier, permettant de reconstruire une version desdites images à ladite résolution de niveau n de qualité supérieure à ladite qualité maximum prédéterminée,

ledit module d'adaptation met en oeuvre des moyens de génération d'un flux de données modifié destiné à au moins un terminal de visualisation desdites images,

ledit flux de données modifié étant obtenu, à partir dudit flux de données source, par extraction dudit sous-flux singulier de niveau n si ledit au moins un terminal de visualisation ne reconstruit pas lesdites images à ladite résolution de niveau n.

14. Support de données comprenant au moins un flux de données représentatif d'une image ou d'une séquence d'images,

ledit support présentant une structure de mémorisation hiérarchique de couches de données emboîtées de niveaux n successifs dudit flux de données, où n est entier, chacun desdits niveaux n correspondant à une résolution prédéterminée desdites images,

l'une au moins desdites couches, de niveau n+1, ayant été codée par prédiction au moins à partir de ladite couche de niveau n,

chacune desdites couches de données de niveau n dudit flux permettant de reconstruire une version desdites images à ladite résolution de niveau n de qualité maximum prédéterminée, **caractérisé en ce que** ledit support de données comprend également, pour l'une au moins desdites couches de données de niveau n, au moins une zone de mémorisation d'au moins un sous-flux, appelé sous-flux singulier, permettant de reconstruire une version desdites images à ladite résolution de niveau n de qualité supérieure à ladite qualité maximum prédéterminée, ladite zone de mémorisation dudit sous-flux singulier de niveau n n'étant pas lue lors de la reconstruction desdites images à une résolution de niveau différent de n.

## Claims

1. Method for coding an image or a sequence of images,

generating a data stream exhibiting a hierarchical structure of nested data layers of successive levels n, where n is an integer, each of the said levels n corresponding to a predetermined resolution of the said images,

the said method comprising a step of coding at least one of the said layers, of level n+1, by prediction at least on the basis of the said layer of level n,

each of the said data layers of level n making it possible to reconstruct a version of the said images with the said resolution of level n of predetermined maximum quality,

**characterized in that** the said method also codes, for one at least of the said data layers of level n, at least one sub-stream, called the singular sub-stream, making it possible to reconstruct a version of the said images with the said resolution of level n of higher quality than the said predetermined maximum quality,

and **in that** the said singular sub-stream of the said layer of level n is not used during the said step of coding by prediction of the said layers of level different from n.

2. Coding method according to Claim 1, **characterized in that** it codes the said data layers of level n in the form of at least one base sub-stream, making it possible to reconstruct a version of base quality of the said images with the said resolution of level n and, for one at least of the said data layers of level n, of at least one enhancement sub-stream, making it possible to refine the said version of base quality, so as to obtain at least one version of enhanced quality of the said images,

and **in that** the said predetermined maximum quality is:

   - the said base quality if the said enhancement sub-stream is not coded;
   - the said at least one enhanced quality if at least one enhancement sub-stream is coded.

3. Coding method according to any one of Claims 1 and 2, **characterized in that** it also comprises a first step of inserting into the said data stream at least one information cue making it possible to identify the said at least one singular sub-stream within the said data stream.

4. Coding method according to any one of Claims 1 to 3, **characterized in that** it also implements, for at least some of the said images, a second step of inserting into the said data stream at least one information cue of quality of reconstruction associated with at least some data of at least some of the said layers, the said quality of reconstruction being dependent on at least one throughput/distortion parameter.

**5.** Device for coding an image or a sequence of images, comprising means for generating a data stream exhibiting a hierarchical structure of nested data layers of successive levels n, where n is an integer, each of the said levels n corresponding to a predetermined resolution of the said images, the said device comprising means for coding at least one of the said layers, of level n+1, by prediction at least on the basis of the said layer of level n, each of the said data layers of level n making it possible to reconstruct a version of the said images with the said resolution of level n of predetermined maximum quality, **characterized in that** the said device also comprises means for coding, for one at least of the said data layers of level n, at least one sub-stream, called the singular sub-stream, making it possible to reconstruct a version of the said images with the said resolution of level n of higher quality than the said predetermined maximum quality, and **in that** the said singular sub-stream of the said layer of level n is not used by the said means for coding by prediction the said layers of level different from n.

**6.** Coding device according to Claim 5, **characterized in that** it comprises a prediction point extraction module making it possible to extract, within the said layer of level n, data to be taken into account during the coding by prediction of the said layer of level n+1.

**7.** Method for decoding a data stream representative of an image or of a sequence of images, the said data stream exhibiting a hierarchical structure of nested data layers of successive levels n, where n is an integer, each of the said levels n corresponding to a predetermined resolution of the said images, each of the said data layers of level n of the said stream making it possible to reconstruct a version of the said images with the said resolution of level n of predetermined maximum quality, one at least of the said layers, of level n+1, having been coded by prediction at least on the basis of the said layer of level n, **characterized in that**, the said data stream comprising, for one at least of the said data layers of level n, at least one sub-stream, called the singular sub-stream, making it possible to reconstruct a version of the said images with the said resolution of level n of higher quality than the said predetermined maximum quality, the said method implements, for the reconstruction of one of the said images with the said resolution of level n, steps of:

- decoding the said data layers of lower level than n;
- as a function of an authorized decoding throughput, decoding at least partially the said layer of level n, and optionally the said singular sub-stream of the said layer of level n,

the said singular sub-streams of the said layers of lower level than n not being decoded during the said reconstruction.

**8.** Device for decoding a data stream representative of an image or of a sequence of images, the said data stream exhibiting a hierarchical structure of nested data layers of successive levels n, where n is an integer, each of the said levels n corresponding to a predetermined resolution of the said images, each of the said data layers of level n of the said stream making it possible to reconstruct a version of the said images with the said resolution of level n of predetermined maximum quality, one at least of the said layers, of level n+1, having been coded by prediction at least on the basis of the said layer of level n, **characterized in that**, the said data stream comprising, for one at least of the said data layers of level n, at least one substream, called the singular sub-stream, making it possible to reconstruct a version of the said images with the said resolution of level n of higher quality than the said predetermined maximum quality, the said decoding device implements, for the reconstruction of one of the said images with the said resolution of level n:

- means for decoding the said layers of lower level than n;
- as a function of an authorized decoding throughput, means for decoding at least partially the said layer of level n, and optionally the said singular sub-stream of the said layer of level n,

the said singular sub-streams of the said layers of lower level than n not being decoded during the said reconstruction.

**9.** Signal for transmitting a data stream representative of an image or of a sequence of images, the said data stream exhibiting a hierarchical structure of nested data layers of successive levels n, where n is an integer, each of the said levels n corresponding to a predetermined resolution of the said images, one at least of the said layers, of level n+1, having been coded by prediction at least on the basis of the said layer of level n, each of the said data layers of level n of the said stream making it possible to reconstruct a version of the said images with the said resolution of level n of predetermined maximum quality, the said signal being structured as information entities within which the said data stream is conveyed,

each of the said information entities comprising a header, advising as regards a type of the said information entity, and a field of useful data,

**characterized in that** the said signal also conveys, for one at least of the said data layers of level n, at least one sub-stream, called the singular sub-stream, making it possible to reconstruct a version of the said images with the said resolution of level n of higher quality than the said predetermined maximum quality,

the said singular sub-stream of level n not being used to reconstruct the said images with a resolution of level different from n.

10. Signal according to Claim 9, **characterized in that** it also comprises at least one information entity of a specific type, comprising at least one information cue of quality of reconstruction associated with at least certain data of the said stream, the said quality of reconstruction being dependent on at least one throughput/distortion parameter.

11. Computer program comprising program code instructions for the execution of the steps of the method for coding an image or a sequence of images according to any one of Claims 1 to 4 when the said program is executed in or by a microprocessor.

12. Computer program comprising program code instructions for the execution of the steps of the method for decoding a data stream representative of an image or of a sequence of images according to Claim 7 when the said program is executed by a microprocessor.

13. Adaptation module for adapting the quality of an image or of a sequence of images,

the said adaptation module being supplied with a source data stream representative of an image or of a sequence of images,

the said source data stream exhibiting a hierarchical structure of nested data layers of successive levels n, where n is an integer, each of the said levels n corresponding to a predetermined resolution of the said images,

each of the said data layers of level n of the said stream making it possible to reconstruct a version of the said images with the said resolution of level n of predetermined maximum quality, one at least of the said layers, of level n+1, having been coded by prediction at least on the basis of the said layer of level n, **characterized in that**,

the said source data stream comprising, for one at least of the said data layers of level n, at least one sub-stream, called the singular sub-stream, making it possible to reconstruct a version of the said images with the said resolution of level n of higher quality than the said predetermined maximum quality,

the said adaptation module implements means for generating a modified data stream intended for at least one terminal for viewing the said images,

the said modified data stream being obtained, on the basis of the said source data stream, by extraction of the said singular sub-stream of level n if the said at least one viewing terminal does not reconstruct the said images with the said resolution of level n.

14. Data medium comprising at least one data stream representative of an image or of a sequence of images,

the said medium exhibiting a hierarchical storage structure for storing nested data layers of successive levels n of the said data stream, where n is an integer, each of the said levels n corresponding to a predetermined resolution of the said images,

one at least of the said layers, of level n+1, having been coded by prediction at least on the basis of the said layer of level n,

each of the said data layers of level n of the said stream making it possible to reconstruct a version of the said images with the said resolution of level n of predetermined maximum quality, **characterized in that** the said data medium also comprises, for one at least of the said data layers of level n, at least one area for storing at least one sub-stream, called the singular sub-stream, making it possible to reconstruct a version of the said images with the said resolution of level n of higher quality than the said predetermined maximum quality,

the said area for storing the said singular sub-stream of level n not being read during the reconstruction of the said images with a resolution of level different from n.

**Patentansprüche**

1. Verfahren zur Codierung eines Bilds oder eine Bildfolge,

das einen Datenstrom erzeugt, der eine hierarchische Struktur von verschachtelten Datenschichten aufeinanderfolgender Ebenen n hat,

wobei n eine ganze Zahl ist, wobei jede der Ebenen n einer vorbestimmten Auflösung der Bilder entspricht,

wobei das Verfahren einen Schritt der Codierung mindestens einer der Schichten einer Ebene n+1 durch Vorhersage zumindest ausgehend von der Schicht einer Ebene n enthält,

wobei jede der Datenschichten einer Ebene n es ermöglicht, eine Version der Bilder mit der Auflösung einer Ebene n von vorbestimmter maximaler Qualität zu rekonstruieren,

**dadurch gekennzeichnet, dass** das Verfahren ebenfalls für mindestens eine der Datenschichten einer Ebene n mindestens einen Teilstrom codiert, singulärer Teilstrom genannt, der es ermöglicht, eine Version der Bilder mit der Auflösung einer Ebene n von höherer Qualität als die vorbestimmte maximale Qualität zu rekonstruieren,

und dass der singuläre Teilstrom der Schicht einer Ebene n nicht in dem Schritt der Codierung durch Vorhersage der Schichten einer Ebene anders als n verwendet wird.

2. Codierverfahren nach Anspruch 1, **dadurch gekennzeichnet, dass** es die Datenschichten einer Ebene n in Form mindestens eines Basis-Teilstroms, der es ermöglicht, eine Basisqualitätsversion der Bilder mit der Auflösung einer Ebene n zu rekonstruieren, und, für mindestens eine der Datenschichten einer Ebene n, mindestens eines Erhöhungs-Teilstroms codiert, der es ermöglicht, die Basisqualitätsversion zu verfeinern, um mindestens eine Version von erhöhter Qualität der Bilder zu erhalten,

und dass die vorbestimmte maximale Qualität ist:

- die Basisqualität, wenn der Erhöhungs-Teilstrom nicht codiert ist;
- die mindestens eine erhöhte Qualität, wenn mindestens ein Erhöhungs-Teilstrom codiert ist.

3. Codierverfahren nach einem der Ansprüche 1 und 2, **dadurch gekennzeichnet**, es ebenfalls einen ersten Schritt der Einfügung in den Datenstrom von mindestens einer Information enthält, die es ermöglicht, den mindestens einen singulären Teilstrom innerhalb des Datenstroms zu identifizieren.

4. Codierverfahren nach einem der Ansprüche 1 bis 3, **dadurch gekennzeichnet, dass** es ebenfalls, zumindest für bestimmte der Bilder, einen zweiten Schritt der Einfügung in den Datenstrom mindestens einer Rekonstruktionsqualitätsinformation anwendet, die zumindest bestimmten Daten zumindest bestimmter der Schichten zugeordnet ist, wobei die Rekonstruktionsqualität von mindestens einem Parameter Bitrate/Verzerrung abhängt.

5. Vorrichtung zur Codierung eines Bilds oder eine Bildfolge,

die Einrichtungen zur Erzeugung eines Datenstroms enthält, der eine hierarchische Struktur von verschachtelten Datenschichten aufeinanderfolgender Ebenen n hat, wobei n eine ganze Zahl ist, wobei jede der Ebenen n einer vorbestimmten Auflösung der Bilder entspricht,

wobei die Vorrichtung Einrichtungen zur Codierung mindestens einer der Schichten, einer Ebene n+1, durch Vorhersage mindestens ausgehend von der Schicht einer Ebene n enthält,

wobei jede der Datenschichten einer Ebene n es ermöglicht, eine Version der Bilder mit der Auflösung einer Ebene n von vorbestimmter maximaler Qualität zu rekonstruieren,

**dadurch gekennzeichnet, dass** die Vorrichtung ebenfalls Codiereinrichtungen, für mindestens eine der Datenschichten einer Ebene n, mindestens eines Teilstroms, singulärer Teilstrom genannt, enthält, der es ermöglichen, eine Version der Bilder mit der Auflösung einer Ebene n von höherer Qualität als die vorbestimmte maximale Qualität zu rekonstruieren,

und dass der singuläre Teilstrom der Schicht einer Ebene n nicht von den Einrichtungen zur Codierung durch Vorhersage der Schichten einer Ebene anders als n verwendet wird.

6. Codiervorrichtung nach Anspruch 5, **dadurch gekennzeichnet, dass** sie ein Modul zur Entnahme eines Vorhersagepunkts enthält, der es ermöglicht, innerhalb der Schicht einer Ebene n Daten zu entnehmen, die bei der Codierung durch Vorhersage der Schicht einer Ebene n+1 zu berücksichtigen sind.

7. Verfahren zur Decodierung eines Datenstroms, der für ein Bild oder eine Bildfolge repräsentativ ist, wobei der Datenstrom eine hierarchische Struktur von verschachtelten Datenschichten aufeinanderfolgender Ebenen n hat, wobei n eine ganze Zahl ist, wobei jede der Ebenen n einer vorbestimmten Auflösung der Bilder entspricht,

wobei jede der Datenschichten einer Ebene n des Stroms es ermöglicht, eine Version der Bilder mit der Auflösung einer Ebene n von vorbestimmter maximaler Qualität zu rekonstruieren,

wobei mindestens eine der Schichten, einer Ebene n+1, durch Vorhersage mindestens ausgehend von der Schicht einer Ebene n codiert wurde,

**dadurch gekennzeichnet, dass**

wenn der Datenstrom für mindestens eine der Datenschichten einer Ebene n mindestens einen Teilstrom, singulärer Teilstrom genannt, enthält, der es ermöglicht, eine Version der Bilder mit der Auflösung einer Ebene n von höherer Qualität als die vorbestimmte maximale Qualität zu rekonstruieren,

das Verfahren für die Rekonstruktion eines der Bilder mit der Auflösung einer Ebene n Schritte anwendet:

- der Decodierung der Datenschichten einer Ebene geringer als n;
- in Abhängigkeit von einer genehmigten Decodierbitrate, der zumindest teilweisen Decodierung der Schicht einer Ebene n und ggf. des singulären Teilstroms der Schicht einer Ebene n,

wobei die singulären Teilströme der Schichten einer Ebene geringer als n bei der Rekonstruktion nicht decodiert werden.

8. Vorrichtung zur Decodierung eines Datenstroms, der für ein Bild oder eine Bildfolge repräsentativ ist, wobei der Datenstrom eine hierarchische Struktur von verschachtelten Datenschichten aufeinanderfolgender Ebenen n enthält, wobei n eine ganze Zahl ist, wobei jede der Ebenen n einer vorbestimmten Auflösung der Bilder entspricht, wobei jede der Datenschichten einer Ebene n des Stroms es ermöglicht, eine Version der Bilder mit der Auflösung einer Ebene n von vorbestimmter maximaler Qualität zu rekonstruieren, wobei mindestens eine der Schichten, einer Ebene n+1, durch Vorhersage mindestens ausgehend von der Schicht einer Ebene n codiert wurde, **dadurch gekennzeichnet, dass**, wenn der Datenstrom für mindestens eine der Datenschichten einer Ebene n mindestens einen Teilstrom, singulärer Teilstrom genannt, enthält, der es ermöglicht, eine Version der Bilder mit der Auflösung einer Ebene n von höherer Qualität als die vorbestimmte maximale Qualität zu rekonstruieren, die Decodiervorrichtung für die Rekonstruktion eines der Bilder mit der Auflösung einer Ebene n anwendet:

- Einrichtungen zur Decodierung der Datenschichten einer Ebene geringer als n;
- in Abhängigkeit von einer genehmigten Decodierbitrate, Einrichtungen zur zumindest teilweisen Decodierung der Schicht einer Ebene n, und ggf. des singulären Teilstroms der Schicht einer Ebene n,

wobei die singulären Teilströme der Schichten einer Ebene geringer als n bei der Rekonstruktion nicht decodiert werden.

9. Übertragungssignal eines Datenstroms, der für ein Bild oder eine Bildfolge repräsentativ ist, wobei der Datenstrom eine hierarchische Struktur von verschachtelten Datenschichten aufeinanderfolgender Ebenen n enthält, wobei n eine ganze Zahl ist, wobei jede der Ebenen n einer vorbestimmten Auflösung der Bilder entspricht, wobei mindestens eine der Schichten, einer Ebene n+1, durch Vorhersage mindestens ausgehend von der Schicht einer Ebene n codiert wurde, wobei jede der Datenschichten einer Ebene n des Stroms es ermöglicht, eine Version der Bilder mit der Auflösung einer Ebene n von vorbestimmter maximaler Qualität zu rekonstruieren, wobei das Signal in Informationsentitäten strukturiert ist, innerhalb denen der Datenstrom übermittelt wird, wobei jede der Informationsentitäten einen Kopf, der über einen Typ der Informationsentität informiert, und ein Feld von Nutzdaten enthält,

**dadurch gekennzeichnet, dass** das Signal ebenfalls für mindestens eine der Datenschichten einer Ebene n mindestens einen Teilstrom, singulärer Teilstrom genannt, transportiert, der es ermöglicht, eine Version der Bilder mit der Auflösung einer Ebene n von höherer Qualität als die vorbestimmte maximale Qualität zu rekonstruieren, wobei der singuläre Teilstrom einer Ebene n nicht verwendet wird, um die Bilder mit einer Auflösung einer Ebene anders als n zu rekonstruieren.

10. Signal nach Anspruch 9, **dadurch gekennzeichnet, dass** es ebenfalls mindestens eine Informationsentität eines spezifischen Typs enthält, die mindestens eine Information über die Rekonstruktionsqualität enthält, die mindestens bestimmten Daten des Stroms zugeordnet ist, wobei die Rekonstruktionsqualität von mindestens einem Parameter Bitrate/Verzerrung abhängt.

11. Computerprogramm, das Programmcodeanweisungen für die Ausführung der Schritte des Verfahrens zur Codierung eines Bilds oder einer Bildfolge nach einem der Ansprüche 1 bis 4 enthält, wenn das Programm in oder von einem Mikroprozessor ausgeführt wird.

12. Computerprogramm, das Programmcodeanweisungen für die Ausführung der Schritte des Verfahrens zur Decodierung eines Datenstroms enthält, der für ein Bild oder eine Bildfolge nach Anspruch 7 repräsentativ ist, wenn das Programm von einem Mikroprozessor ausgeführt wird.

13. Modul zur Qualitätsanpassung eines Bilds oder einer Bildfolge, wobei das Anpassungsmodul mit einem Quelldatenstrom gespeist wird, der für ein Bild oder eine Bildfolge repräsentativ ist, wobei der Quelldatenstrom eine hierarchische Struktur von verschalteten Datenschichten aufeinanderfolgender Ebenen n enthält, wobei n eine ganze Zahl ist, wobei jede der Ebenen n einer vorbestimmten Auflösung der Bilder entspricht, wobei jede der Datenschichten einer Ebene n des Stroms es ermöglicht, eine Version der Bilder mit der Auflösung einer Ebene n von vorbestimmter maximaler Qualität zu rekonstruieren, wobei mindestens eine der Schichten, einer Ebene n+1, durch Vorhersage mindestens ausgehend von der Schicht einer Ebene n codiert wurde, **dadurch gekennzeichnet, dass**, wenn der Quelldatenstrom für mindestens eine der Datenschichten einer Ebene n mindestens einen Teilstrom, singulärer Teilstrom genannt, enthält, der es ermöglicht, eine Version der Bilder mit der Auflösung einer Ebene n von höherer Qualität als die vorbestimmte maximale Qualität zu rekonstruieren,

das Anpassungsmodul Einrichtungen zur Erzeugung eines veränderten Datenstroms einsetzt, der für mindestens ein Anzeigeterminal der Bilder bestimmt ist,

wobei der veränderte Datenstrom ausgehend von dem Quelldatenstrom durch Entnahme des singulären Teilstroms einer Ebene n erhalten wird, wenn das mindestens eine Anzeigeterminal nicht die Bilder mit der Auflösung einer Ebene n rekonstruiert.

14. Datenträger, der mindestens einen Datenstrom enthält, der für ein Bild oder eine Bildfolge repräsentativ ist,

wobei der Träger eine hierarchische Speicherstruktur von verschachtelten Datenschichten aufeinanderfolgender Ebenen n des Datenstroms aufweist, wobei n eine ganze Zahl ist,

wobei jede der Ebenen n einer vorbestimmten Auflösung der Bilder entspricht,

wobei mindestens eine der Schichten, einer Ebene n+1, durch Vorhersage mindestens ausgehend von der Schicht einer Ebene n codiert wurde,

wobei jede der Datenschichten einer Ebene n des Stroms es ermöglicht, eine Version der Bilder mit der Auflösung einer Ebene n von vorbestimmter maximaler Qualität zu rekonstruieren,

**dadurch gekennzeichnet, dass** der Datenträger ebenfalls für mindestens eine der Datenschichten einer Ebene n mindestens eine Speicherzone mindestens eines Teilstroms, singulärer Teilstrom genannt, enthält, der es ermöglicht, eine Version der Bilder mit der Auflösung einer Ebene n von höherer Qualität als die vorbestimmte maximale Qualität zu rekonstruieren,

wobei die Speicherzone des singulären Teilstroms einer Ebene n nicht bei der Rekonstruktion der Bilder mit einer Auflösung einer Ebene anders als n gelesen wird.

EP 1 839 442 B1

Fig. 1

Fig. 2

| BL n-1 | EL n-1 | BL n | EL n | ... |

Fig. 4

**Fig. 3**

**Fig. 5**

| BL 0 | ... | BL n | EL 0 | ... | EL n |
|------|-----|------|------|-----|------|

**Fig. 6**

Fig. 7

Fig. 8

QCIF          CIF

Fig. 9

Fig. 10

Fig. 11

Fig. 12

Fig. 13

Fig. 15

Fig. 14

Fig. 16

176

10                                             83

177 — Pg          M — 178

Fig. 17

181

83                                             183

182 — Pg          M — 180

Fig. 18

191

183                                            193

192 — Pg          M — 190

Fig. 19

**EP 1 839 442 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Scalable Video Model 3.0. *N6716 ISO/IEC JTC 1/SC 29/WG 11,* Octobre 2004